# EUROPEAN PATENT SPECIFICATION

(11) **EP 3 299 951 B1**
(45) Date of publication and mention of the grant of the patent: **15.09.2021**
(21) Application number: 17184782.5
(22) Date of filing: 25.11.2013
(51) Int. Cl.: G06F 7/00

(54) **LIGHT-BASED TOUCH CONTROLS ON A STEERING WHEEL AND DASHBOARD**
LICHTBASIERTE BERÜHRUNGSEMPFINDLICHE STEUERUNGEN AUF EINEM LENKRAD UND ARMATURENBRETT
COMMANDES TACTILE LUMINEUSES SUR UN VOLANT DE DIRECTION ET TABLEAU DE BORD

(30) Priority: 27.11.2012 US 201261730139 P
(43) Date of publication of application: 28.03.2018
(62) Divisional of application: 13859391.8
(73) Proprietor: Neonode Inc., San Jose CA 95134 (US)
(72) Inventor: FRÖJDH, Gunnar, Martin, S-131 71 Dalaro (SE); FELLIN, Simon, S-44834 Floda (SE); ERIKSSON, Thomas, S-114 32 Stockholm (SE); KARLSSON, John, S-195 32 Märsta (SE); HEDIN, Maria, S-191 62 Solletuna (SE); BERGLIND, Richard, S-125 58 Älvsjö (SE)
(74) Representative: Lavoix

(56) References cited:
- DE-A1- 4 423 744
- JP-A- 2009 248 629
- US-A1- 2012 179 328

## Description

### CROSS REFERENCES TO RELATED APPLICATIONS

This application is a non-provisional of U.S. Provisional Application No. 61/730,139, entitled LIGHT-BASED TOUCH CONTROLS ON A STEERING WHEEL AND DASHBOARD, and filed on November 27, 2012 by inventors Gunnar Martin Fröjdh, Thomas Eriksson, John Karlsson, Maria Hedin and Richard Berglind.

### FIELD OF THE INVENTION

The field of the present invention is light-based user interfaces for vehicles.

### BACKGROUND OF THE INVENTION

JP 2009-248629 A relates to a system for a vehicle, comprising: a steering element situated opposite a driver seat in a vehicle, a plurality of proximity sensors encased in the periphery of the steering element operable to detect movements of a driver's hand along the outer periphery of the steering element; and a processor, coupled with said proximity sensors to control an interactive deck housed in the vehicle and/or contextual user interfaces functions of the vehicle in response to the detected hand movements.

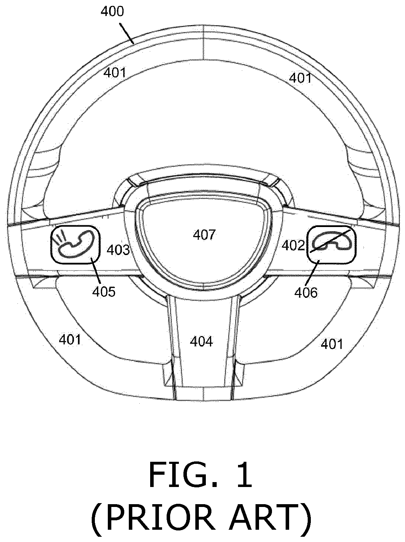

Reference is made to **FIG. 1****,** which is a simplified illustration of prior art steering wheel. A prior art steering wheel **400,** shown in **FIG. 1****,** includes a circular gripping member **401,** one or more connecting members **402** - **404** that connect the gripping member 401 to steering column **407,** and buttons **405** and **406** on connecting members **402** and **403** for controlling various devices in the vehicle. Connecting members **402** - **404,** which connect gripping member **401** to steering column **407,** are also referred to as spokes. In **FIG. 1****,** button **405** is used to answer an incoming phone call on the vehicle's BLUETOOTH® speaker phone and button **406** hangs up the call. BLUETOOTH is a trademark owned by the Bluetooth SIG of Kirkland, WA, USA. Controls mounted in a steering wheel can be operated comfortably and safely since the driver is able to control and operate these controls without taking hands off the wheel or eyes off the road.

Originally, the first button added to a steering wheel was a switch to activate the car's electric horn. When cruise control systems were introduced, some automakers located the operating switches for this feature on the steering wheel as well. Today additional button controls for an audio system, a telephone and voice control system, a navigation system, a stereo system, and on board computer functions are commonly placed on the steering wheel.

US Patent Publication No. 2012/0232751 A1 for PRESSURE SENSITIVE STEERING WHEEL CONTROLS teaches adding pressure-sensitive controls to the circular gripping member of the steering wheel. Pressure sensors are located at various locations along the perimeter of the gripping member, and different locations correspond to different controls. A control is actuated in response to an application of pressure at a sensor location, e.g., by the user tightening his grip.

Many present-day vehicle dashboard consoles involve much more than simply displaying information to the driver. The driver, in many instances, is required to navigate a series of touch screen menus and icons in order to operate the dashboard console.

### SUMMARY

According to the invention, the system according to claim 1 and the method according to claim 3 are provided. The dependent claims set out particular embodiments of the invention.

Embodiments of the present invention provide a sensor system that detects position, proximity and pressure, separately or in combination, to enable input of complex gestures on and around a steering element. In some embodiments, the sensor system of the present invention is used in conjunction with a head-up display (HUD) or wearable goggles with built in picture presentation. In this case, the HUD or goggles render icons or a grid in the user's field of view. The user extends his hand to interact with the rendered image elements. The sensor detects the user's gestures in 3D space and these coordinates are then mapped onto the rendered image to interpret the user input.

Embodiments of the present invention also provide a dashboard coupled with a sensor system that utilizes the dashboard display for relevant information without cluttering the dashboard with buttons. The sensor system detects position, proximity and direction for input of complex gestures on the dashboard. In some embodiments, the dashboard is presented to the driver through a HUD or wearable goggles with built in picture presentation. In this case the sensor system enables the driver to interact with graphics presented by the HUD or goggles, by detecting the driver hand gestures and mapping them onto the projected HUD or goggle images. Embodiments of the present invention facilitate operation of the vehicle dashboard system by eliminating irrelevant information from the display. Moreover, a user interface in accordance with the present invention provides context-relevant options, namely, options related to the state and circumstances of the vehicle. E.g., the user interface presents parking options when the user stops the vehicle, and presents options to unlock various doors, such as the trunk and gas tank, when the motor is turned off.

In some embodiments, in response to a detected upward slide gesture the processor increases an adjustable setting for the entertainment and navigation system and in response to a detected downward slide gesture the processor decreases the adjustable setting.

In some embodiments, the entertainment and navigation system includes a plurality of adjustable features, wherein a setting for a selected feature is adjusted in response to the hand slide gestures, and wherein the processor changes the selected feature in response to at least one tap on the outer periphery of the steering wheel. When the processor changes the selected feature, a graphic indicating the newly selected feature is rendered on a display connected to the entertainment and navigation system, such as a dashboard-mounted display or HUD. In some embodiments, this display is situated inside goggles worn by the driver. Examples of adjustable settings include raising or lowering the audio volume, selecting a radio channel and selecting a track in a music library, bass, treble, image view in a GPS system - e.g., 2D view, 3D view, satellite view, and zooming an image.

In some embodiments, a second plurality of proximity sensors encased in the steering wheel facing the driver, detects hand wave gestures between the steering wheel and the driver, wherein the processor changes a mode of the entertainment and navigation system in response to the hand wave gestures. This said second plurality of proximity sensors is also operative to detect the driver entering the motor vehicle.

In some embodiments, the steering wheel further comprises a cavity, i.e., an air gap, an array of light emitters connected to the processor that project light beams across the cavity and an array of light detectors connected to the processor that detect the projected light beams. This enables detecting wave gestures inside the cavity that interrupt the light beams, which allows the user to control the entertainment and navigation system through these detected gestures inside the cavity. These wave gestures are performed by one or more fingers or by the palm of a hand.

In some embodiments having a steering wheel cavity, there are multiple arrays of light emitters connected to the processor that project light beams at different geometric planes across the cavity and multiple arrays of light detectors connected to the processor that detect the projected light beams, for detecting wave gestures across multiple geometric planes inside the cavity that interrupt the light beams. This enables detecting wave gestures across a depth of the cavity for a wide range of wave gestures. For example, these sensors detect an angle at which the finger or hand penetrates the cavity. They also detect a velocity of approach by measuring the different times at which the finger or hand crosses each geometric plane. In some embodiments of the cavity the light beams are all projected vertically across the cavity. In other embodiments, a bidirectional grid of light beams is projected across the cavity.

In order to prevent inadvertent adjusting of the entertainment system controls during driving, in certain embodiments the hand slide gestures control the entertainment and navigation system only when the steering wheel is not substantially rotated, namely, that it is at the "twelve-o'clock" position, or has not deviated more than a threshold amount from the "twelve-o'clock" position.

In some embodiments, the entertainment and navigation system includes a display, and the processor zooms an image on the display in response to detecting a spread gesture performed by two or more fingers in the cavity, and pans the image in response to a translation gesture performed by one or more fingers in the cavity. In some embodiments of the present invention, the finger spread gesture is performed by spreading or separating the tips of all fingers of one hand inside the cavity. In other embodiments of the present invention, the finger spread gesture is performed by extending all fingers of one hand inside the cavity. The image is, inter alia, a map related to the navigation system, a rear view camera image, or a graphic related to the entertainment system.

In some embodiments, the vehicle includes a wireless phone interface, inter alia a BLUETOOTH® interface, that is controlled using tap gestures or hand slide gestures on the outer perimeter of the steering wheel. For example, a single tap answers a call and a double-tap hangs up or declines the call.

In some embodiments, a sudden quick hand slide gesture along the outer periphery of the steering wheel mutes the entertainment and navigation system.

In some embodiments, when the processor changes the selected feature, the processor renders an image of the steering wheel on a display mounted in the vehicle, the image indicating which command is associated with each steering wheel input zone.

### BRIEF DESCRIPTION OF THE DRAWINGS

The present invention will be more fully understood and appreciated from the following detailed description, taken in conjunction with the drawings in which:
**FIG. 1** is a simplified illustration of prior art steering wheel;
**FIG. 2** is a simplified illustration of a first embodiment of a steering wheel having multiple detection zones, in accordance with an embodiment of the present invention;
**FIG. 3** is a simplified illustration of a second embodiment of a steering wheel having multiple detection zones, in accordance with an embodiment of the present invention;
**FIG. 4** is a simplified illustration of a bidirectional light grid, namely, horizontal and vertical light beams, for detecting objects inserted into a hollow portion of the steering wheel of **FIG. 3****,** in accordance with an embodiment of the present invention;
**FIG. 5** is a simplified side view and profile view of the steering wheel of FIG. 3, in accordance with an embodiment of the present invention;
**FIG. 6** is a flow chart describing a sequence of user interface events for adjusting car stereo controls, in accordance with an embodiment of the present invention;
**FIG. 7** is a flow chart describing a sequence of user interface events for entering text, in accordance with an embodiment of the present invention;
**FIG. 8** is a flow chart describing a sequence of user interface events for manipulating an image displayed on a car dashboard, in accordance with an embodiment of the present invention;
**FIGS. 9 - 11** are simplified illustrations of a PCB assembly (PCBA) in a steering wheel, in accordance with an embodiment of the present invention;
**FIGS. 12 -16** are simplified diagrams of proximity sensors on a steering wheel, in accordance with an embodiment of the present invention;
**FIGS. 17 - 20** are simplified illustrations of slider controls embedded in a steering wheel, in accordance with an embodiment of the present invention;
**FIGS. 21** - **30** are simplified diagrams of sensors embedded in a steering wheel that detect gestures inside an open cavity in the steering wheel, in accordance with an embodiment of the present invention;
**FIGS. 31 - 35** are simplified diagrams of proximity sensors embedded in the outer rim of a steering wheel, in accordance with an embodiment of the present invention;
**FIGS. 36 - 38** are simplified diagrams of touch sensors embedded across the outer rim of a steering wheel, in accordance with an embodiment of the present invention;
**FIG. 39** is a simplified illustration of a steering wheel with multiple touch sensors and embedded touch screen displays, in accordance with an embodiment of the present invention;
**FIG. 40** is a simplified illustration of the steering wheel of **FIG. 39** with a head-up display, in accordance with an embodiment of the present invention;
**FIGS. 41** and **42** are simplified illustrations or proximity sensors that line the steering column of the steering wheel of **FIG. 39****,** in accordance with an embodiment of the present invention;
**FIG. 43** is a simplified illustration of a user interface gesture performed on the steering column of the steering wheel of **FIG. 39****,** in accordance with an embodiment of the present invention; and
**FIGS. 44** - **46** are simplified illustrations of user interfaces and associated sweep gestures that are enabled on a vehicle dashboard, in accordance with an embodiment of the present invention.

In the specification and figures, the following numbering scheme is used. Steps in flow charts are numbered between 1 - 99, light transmitters are numbered in the 100's, light receivers are numbered in the 200's, light guides and lenses are numbered in the 300's, miscellaneous items are numbered in the 400's, detection zones and sensors are numbered in the 500's, and light beams are numbered in the 600's. Like numbered elements are similar but not necessarily identical.

The following tables catalog the numbered elements and list the figures in which each numbered element appears.

| **Light Transmitters** | | | |
|---|---|---|---|
| **Element** | **Figures** | **Element** | **Figures** |
| **100** | **9, 30, 36, 37, 38** | **106** | **26** |
| **101** | **14, 15, 16** | **107** | **26** |
| **102** | **15** | **108** | **26** |
| **103** | **9, 19, 20** | **109** | **35** |
| **104** | **9, 23, 24, 25** | | |

| **Light Receivers** | | | |
|---|---|---|---|
| **Element** | **Figures** | **Element** | **Figures** |
| **200** | **9, 30, 36, 37, 38** | **204** | **28, 29, 30** |
| **201** | **14, 15** | **209** | **35** |
| **202** | **15** | **210** | **35** |
| **203** | **9, 19** | | |

| **Light Guides and Lenses** | | | |
|---|---|---|---|
| **Element** | **Figures Element** | | **Figures** |
| **300** | **9, 10, 11, 30, 36, 37, 38** | **343** | **24, 25** |
| **310** | **9, 10, 11, 36** | **344** | **23, 25** |
| **311** | **9, 10, 11, 36** | **345** | **23, 24, 25, 26** |
| **320** | **9, 10, 11, 18, 19, 20** | **346** | **27, 28** |
| **321** | **18** | **347** | **29** |
| **330** | **9, 10, 11, 14, 15, 16** | **348** | **29,30** |
| **331** | **9, 10, 11, 14, 15** | **353** | **28** |
| **332** | **13** | **354** | **32, 33** |
| **333** | **13** | **355** | **32, 33** |
| **334** | **13** | **356** | **32, 33** |
| **335** | **14, 15** | **357** | **32, 33** |
| **336** | **15** | **358** | **34, 35** |
| **337** | **15** | **359** | **34** |
| **338** | **15** | **360** | **34** |
| **340** | **9, 10, 11, 28** | **361** | **34** |
| **341** | **9, 10, 11, 23, 24, 25** | **362** | **36** |
| **342** | **22** | | |

| **Miscellaneous Items** | | |
|---|---|---|
| **Element** | **Figures** | **Description** |
| **400** | **1, 9, 31, 39 - 43** | steering wheel |
| **401** | **1,2** | grip |
| **402** | **1,2** | right spoke |
| **403** | **1,2** | left spoke |
| **404** | **1,2** | bottom spoke |
| **405** | **1** | answer button |
| **406** | **1** | reject button |
| **407** | **1,2,41,43** | steering column |
| **408** | **5** | nominal range |
| **409** | **5** | nominal range |
| **410** | **5** | thickness of grip |
| **411** | **9, 10, 11, 30** | PCB |
| **412** | **9** | opening in steering wheel |
| **413** | **16, 20** | finger |
| **414** | **17** | recessed cavity wall |
| **415** | **17** | recessed cavity wall |
| **416** | **17** | recessed cavity wall |
| **417** | **17** | inclined surface |
| **418** | **18** | intermediate layer |
| **419** | **18** | narrow openings |
| **420** | **26** | beam offset |
| **421** | **29** | cavities for light receivers in light guide |
| **422** | **33** | plastic rim |
| **423** | **44, 45, 46** | dashboard display |
| **424** | 44 | icon |
| **425** | **44, 45** | icon |
| **426** | **45** | diagonal sweep gesture |
| **427** | **45** | icon |
| **428** | **46** | icon |
| **429** | **46** | icon |
| **430** | **46** | text |
| **431** | **46** | icon |
| **432** | **46** | icon |
| **433** | **46** | directional sweep gesture |
| **434** | **46** | directional sweep gesture |
| **435** | **46** | directional sweep gesture |
| **436** | **46** | directional sweep gesture |
| **437** | **46** | directional sweep gesture |
| **438** | **46** | directional sweep gesture |
| **439** | **46** | directional sweep gesture |
| **440** | **46** | directional sweep gesture |
| **450** | **39, 40** | Touch screen display |
| **451** | **40** | Head-up display |
| **452** | **43** | Hand |

| **Detection Zones and Sensors** | | |
|---|---|---|
| **Element** | **Figures** | **Description** |
| **501** | **2, 21** | zone |
| **502** | **2** | zone |
| **503** | **2** | zone |
| **504** | **2** | zone |
| **505** | **2** | zone |
| **506** | **2** | zone |
| **507** | **2** | zone |
| **508** | **2** | zone |
| **510** | **3** | zone |
| **511** | **3** | zone |
| **512** | **3** | zone |
| **513** | **3** | zone |
| **514** | **3** | zone |
| **515** | **3** | zone |
| **516** | **3** | zone |
| **517** | **3** | zone |
| **520** | **12** | sensor |
| **521** | **12** | sensor |
| **522** | **17** | sensor |
| **523** | **17** | sensor |
| **524** | **31** | zone |
| **525** | **31** | zone |
| **526** | **31** | zone |
| **527** | **31** | zone |
| **528** | **39** | Zone |
| **530** | **39, 40** | Slider sensor |
| **531, 532** | **39, 41** | Proximity sensor strip |

| **Light Beams** | | |
|---|---|---|
| **Element** | **Figures** | **Description** |
| **600** | **4** | light beam grid |
| **601** | **16** | light beam |
| **602** | **16** | light beam |
| **603** | **16** | light beam |
| **604** | **20** | light beam |
| **605** | **25** | light beam |
| **606** | **26** | light beam |
| **607** | **26** | light beam |
| **608** | **26** | light beam |
| **610** | **26** | portion of light beam |
| **611** | **29** | light beam |
| **612** | **35** | light beam |
| **613** | **38** | light beam |
| **614** | **42** | Proximity sensor beam |
| **615** | **42** | Proximity sensor reflected beam |

### DETAILED DESCRIPTION

Aspects of the present invention relate to light-based touch controls that allow a driver to keep his hands on a steering element while operating peripheral electronic devices in a vehicle.

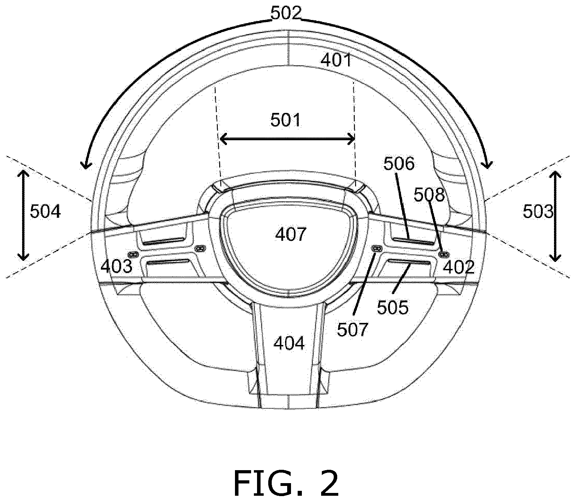

Reference is made to **FIG. 2****,** which is a simplified illustration of a first embodiment of a steering wheel having multiple detection zones, in accordance with an embodiment of the present invention. Shown in **FIG. 2** is a steering wheel with multiple detection zones for user input, indicated by numbers in the figure. Detection properties for each zone are listed below.

Zone **501** is a portion of a cavity surrounded by gripping member **401** and the top of steering column **407.** The present invention enables detection of user gestures in this cavity. An example gesture is sweeping a hand or finger horizontally across the cavity.

Zone **502** is related to a portion of the outer rim of gripping member **401.** This zone is configured to receive sliding gestures, where the driver slides a finger or hand along this portion of the outer rim. An example application for this gesture is to control the volume on the vehicle's audio system, where a clockwise hand-slide or sweep gesture increases the volume, a counterclockwise hand-slide or sweep gesture reduces the volume, and a fast hand-slide or sweep gesture along zone **502** mutes the audio. If the audio is on mute, a fast hand-slide or sweep gesture along zone **502** cancels the mute. Another application is to use hand-slide or sweep gestures to answer or reject an incoming phone call. In this case a hand-slide or sweep gesture in a first direction, e.g., clockwise, answers the call, and a hand-slide or sweep gesture in the opposite direction rejects the call.

Zones **503** and **504** are proximity sensor zones configured to detect movement of a hand in the detection zone which is the airspace several inches outward on either side of the steering wheel. An example application uses zone **503** for controlling the windshield wipers and zone **504** for controlling the directional signals, i.e., blinking lamps mounted near the left and right front and rear corners of a vehicle activated by the driver on one side of the vehicle at a time to advertise intent to turn or change lanes toward that side. In this example, the windshield wipers are activated, or their speed is increased, when an upward hand gesture is detected in zone **503,** and the windshield wipers are slowed down or turned off when a downward hand gesture is detected in zone **503.** Similarly, the right directional signal is activated when an upward hand gesture is detected in zone **504,** and the left directional signal is activated when a downward hand gesture is detected in zone **504.**

Another example application for zones **503** and **504** is modeled on Formula One sports cars, where the gear shifter is adapted to fit onto the steering wheel in the form of two paddles; depressing the right paddle shifts into a higher gear, while depressing the left paddle shifts into a lower one. In the present embodiment, a gesture corresponding to depressing the right paddle is detected in zone **503,** and a gesture corresponding to depressing the left paddle is detected in zone **504.**

Zones **505** and **506** are two touch and slider controls on the right connecting member **402.** An additional two touch and slider controls (not numbered) are shown on the left connecting member **403.** These zones receive touch gestures and glide gestures. A glide gesture includes the steps of a user touching this sensor and then sliding his finger along the sensor. Slider controls are suitable for selecting a value within a range, e.g., to adjust dashboard brightness or audio volume. A glide gesture in one direction gradually increases the value, and a glide gesture in the opposite direction gradually decreases the value.

These controls determine a location of a touch along the slider and are therefore suitable for touch gestures as well. For example, extended touches or taps can be used for selecting a value within a range, such as to adjust dashboard brightness or audio volume. A tap or touch at one end of the slider increases the value, and a tap or touch at the opposite end decreases the value.

Zones **507** and **508** are hover and proximity sensors, configured to detect objects that are opposite but not touching the steering wheel. One example application detects when a driver enters the vehicle. This can wake up the system and display a greeting message to the driver. In some embodiments of the present invention, these sensors detect a distance between the driver and the wheel, inter alia, in order to adjust the driver's air bags according to this distance; namely, a larger distance requires a greater degree of inflation.

An additional two hover and proximity sensors (not numbered) are shown on the left connecting member **403.** In some embodiments of the present invention, these zones are also configured to detect touch gestures. Another application for zones **507** and **508** is to select a user input mode. For example, zone **502** has two associated applications: a music library and a radio station selector. Hand-slide or sweep gestures along zone **502** either browse the music library or scan radio channels depending on the active mode. The active mode is toggled or selected by touching one of zones **507** and **508.** For example, a tap on zone **508** activates music library mode and a tap on zone **507** activates radio mode. Alternatively, a right-to-left wave gesture above zones **507** and **508** activates music library mode, and a left-to-right wave gesture above zones **507** and **508** activates radio mode.

In general, the different zones are coordinated to provide fluent and flexible navigation for a plurality of applications. The user selects an application by interacting with zones **507** and **508** and each of the other zones **501** - **506** is assigned an aspect of the active application. Each time an application is selected, an image of the steering wheel appears on the dashboard indicating which command is associated with each of the input zones.

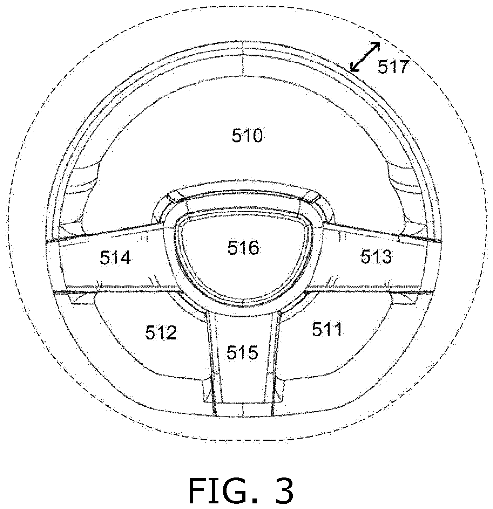

Reference is made to **FIG. 3****,** which is a simplified illustration of a second embodiment of a steering wheel having multiple detection zones, in accordance with an embodiment of the present invention. The multiple detection zones for user input are indicated by numbers in the figure. Detection properties for each zone are listed below.

Zones **510** - **512** are air gaps in the steering wheel. A two-dimensional grid of light beams is projected into each air gap to detect any object inserted therein.

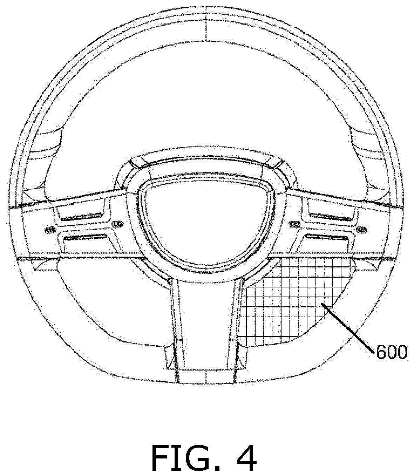

Reference is made to **FIG. 4****,** which is a simplified illustration of a bidirectional light grid, namely, horizontal and vertical light beams, for detecting objects inserted into a hollow portion of the steering wheel of **FIG. 3****,** in accordance with an embodiment of the present invention. Shown in **FIG. 4** is a light-beam grid **600** in zone **511.**

In some embodiments more than one layer of light beams is projected into each air gap to provide a series of detections at different points along the thickness of the air gap.

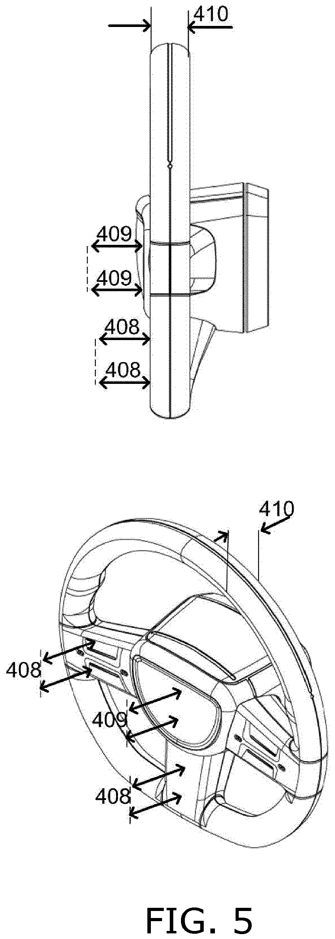

Reference is made to **FIG. 5****,** which is a simplified side view and profile view of the steering wheel of **FIG. 3****,** in accordance with an embodiment of the present invention. **FIG. 5** shows the steering wheel of **FIGS. 3** and **4** in profile view and at an angle from above the wheel's upper right corner. Both views indicate thickness **410** of gripping member **401** along which the multiple light grids are stacked. This enables detecting an angle at which an object is inserted into the air gap. A full explanation of multiple detection layers and their use for z-axis coordinate detection is provided in U.S. Patent No. 8,416,217 for LIGHT-BASED FINGER GESTURE USER INTERFACE.

Returning to **FIG. 3****,** detection zone **517** is a hovering space surrounding the outer perimeter of the steering wheel. Objects that enter zone **517** are detected by sensors embedded in the gripping member of the steering wheel.

Zones **513 - 515** detect the position of one or more objects touching, or in close proximity to, these zones. The range of proximity detection is indicated in **FIG. 5** by nominal range **408.** In some embodiments zones **513 - 515** are also adapted to detect an amount of pressure applied by a touch object.

Zone **516** detects the position of one or more objects touching, or in close proximity to, it. The range of proximity detection is indicated in **FIG. 5** by nominal range **409.** In some embodiments zone **516** is also adapted to detect an amount of pressure applied by a touch object.

In order to avoid inadvertent input to the detection zones while steering the vehicle, the touch-sensitive input system is activated only under particular conditions. For example, in order that the system register touch input the user first performs a specific touch gesture on one or more of the detection zones. As another example, the user must activate a toggle switch located away from the steering wheel before the detection zones register user input. Yet another example is that the position of the steering wheel enables touch input to be registered. For example, only when the steering wheel is in the *"twelve o'clock"* or neutral position the system registers input from the detection zones, whereas once the wheel is rotated a given number of degrees from the neutral position, the system actively monitors the detection zones but does not generate input to other devices.

A few use cases will demonstrate the user interface of the present invention. A first use case is adjusting the volume in the car stereo.

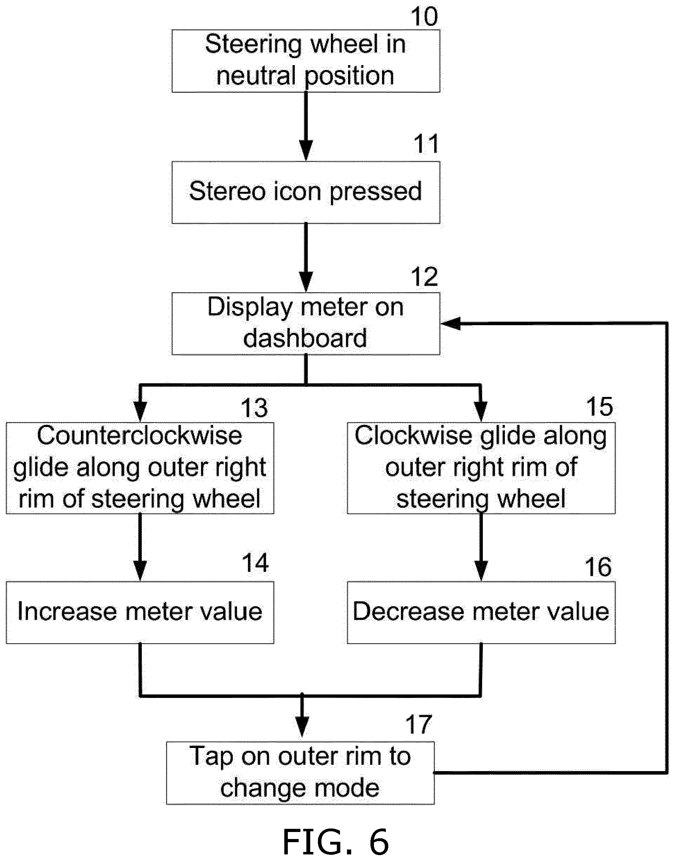

Reference is made to **FIG. 6****,** which is a flow chart describing a sequence of user interface events for adjusting car stereo controls, in accordance with an embodiment of the present invention. At step **10** the steering wheel is in neutral position to enable touch input. At step **11** the driver presses a location in zone **513** that activates controls for the entertainment system. The first parameter to be adjusted by the controls is the volume. At step **12** a volume meter is presented on a display device such as a dashboard display or HUD. The driver adjusts the volume level by performing a hand-slide or sweep gesture along the right outer rim of the steering wheel, i.e., the right section of zone **517.** Steps **13** - **16** show that a counterclockwise gesture along the right hand side of detection zone **517** increases the volume, and a clockwise gesture along this zone decreases the volume. This counterclockwise gesture can be performed by raising the driver's right hand along the steering wheel. At step **17** one or more taps on the outside of the steering wheel (zone **517)** puts the input system into a different mode, e.g., to adjust the bass or treble. The system then returns to step **12** where it displays a meter relevant for the active mode, e.g., bass or treble, instead of volume. While the right hand is performing gestures that activate system functions, the left hand can perform additional gestures in the detection zones that do not interfere with the right hand gestures. In some instances these left hand gestures do not generate any commands.

A second use case is text input of an address to a vehicle navigation system.

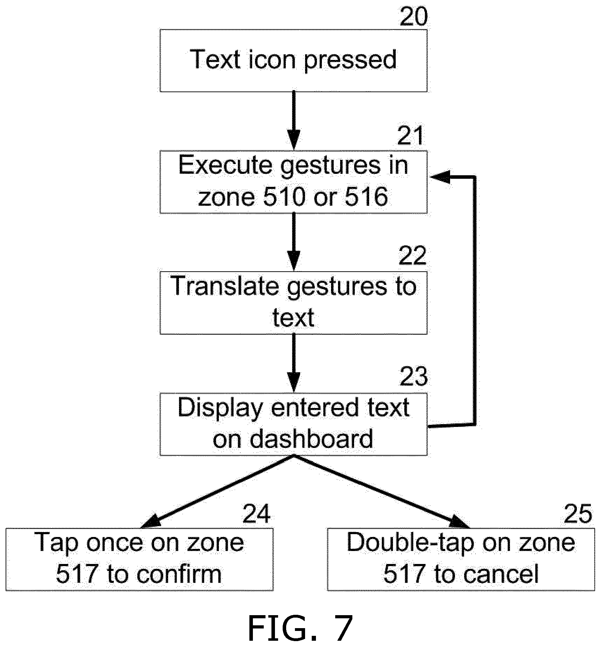

Reference is made to **FIG. 7****,** which is a flow chart describing a sequence of user interface events for entering text, in accordance with an embodiment of the present invention At step **20** the driver presses a location on zone **514** marked by a text input symbol to activate text input mode. At steps **21** and **22,** gestures inside zone **510** are interpreted as characters or symbols. Alternatively, characters are input by finger or stylus glide gestures on the surface of zone **516.** At step **23** the entered text is displayed on the dashboard or HUD. Steps **21** - **23** continue in a loop until the displayed text forms a name or word (or portion thereof). To confirm the input, the driver taps once on the outer rim of the steering wheel (zone **517)** as indicated by step **24.** To delete or reject the input, the driver double-taps on the outer rim of the steering wheel (zone **517)** as indicated by step **25.** The system operates independently of right/left handedness.

A third use case is an image viewer.

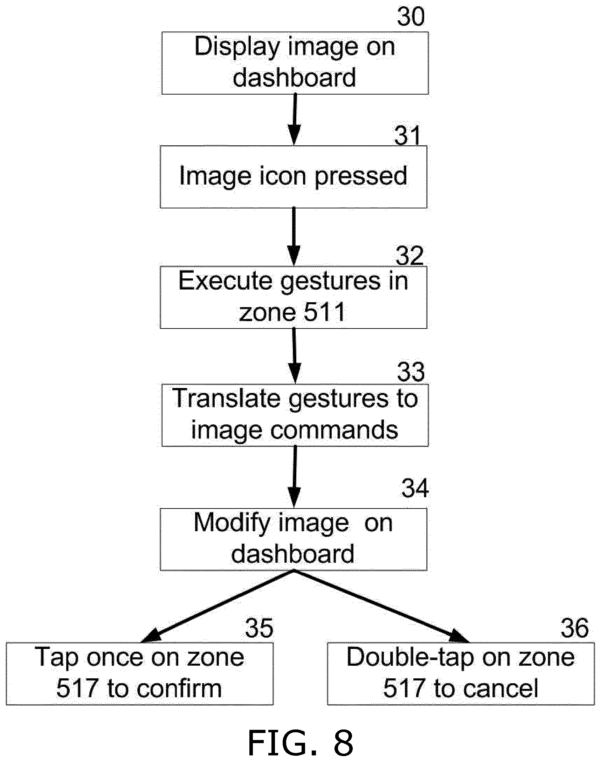

Reference is made to **FIG. 8****,** which is a flow chart describing a sequence of user interface events for manipulating an image displayed on a car dashboard, in accordance with an embodiment of the present invention. At step **30** an image is displayed on the dashboard. Alternatively, this image is displayed on an HUD. This image may be a map, a rear-view camera viewfinder image or any other image. At step **31** the driver activates image manipulation mode, e.g., by tapping a location on zone **515** marked by an image symbol. At steps **32** - **34** hand movements in detection zone **511** are interpreted as image manipulation commands. These commands include panning, zooming and rotating the image. The hand movements supported include one-finger and multi-finger translation gestures, and two-finger pinch, two-finger spread and two-finger rotation gestures. Further hand movements supported include full-hand spreads, whereby a user spreads all fingers on one hand inside the air gap. Other supported gestures include full-hand pinch gestures, which begin when all fingertips of one hand are not touching each other, and the user draws his fingertips together. When multiple layers of light-beam guides provide z-axis detection, tilt gestures are also supported. A tilt gesture uses the angle at which a finger is inserted through air gap **511** as one of the gesture attributes. A full discussion of supported gestures and commands is included in the aforementioned U.S. Patent No. 8,416,217 for LIGHT-BASED FINGER GESTURE USER INTERFACE. The driver taps once on the outer rim of the steering wheel (zone **517)** to accept an input, as indicated at step **35,** and taps twice on the outer rim of the steering wheel (zone **517)** to cancel an input as indicated at step **36.** This system operates independently of right/left handedness.

Discussion now turns to implementing sensors for each of the various detection zones. Generally speaking, a light-based touch or proximity sensor includes a light transmitter and a light receiver, and is based on the principle that an object such as a finger placed on or near the sensor changes the coupling of light between the transmitter and the receiver. Thus, a channel that conducts signals between the transmitter and the receiver indicates whether there is a touch inside the channel. There are two types of channels; namely,
A. channels for which a finger activates a signal between the transmitter and the receiver; and
B. channels for which a finger blocks a signal between the transmitter and the receiver.

For channels of type A, a low signal, near 0, indicates no touch, and a high signal indicates a touch. For channels of type B, a high signal indicates no touch, and a low signal, near 0, indicates a touch.

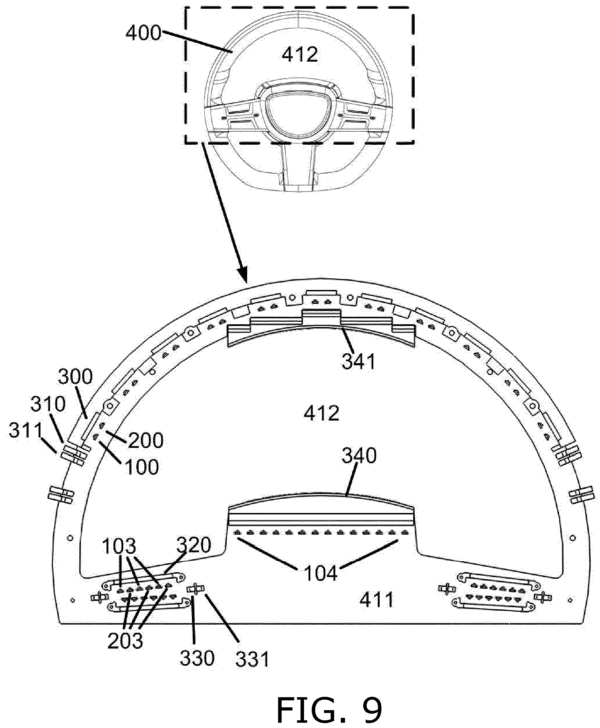

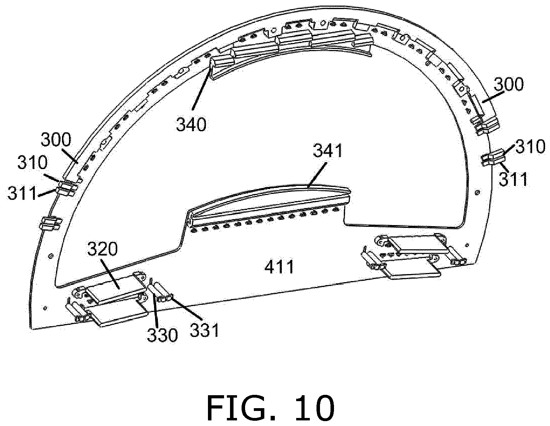

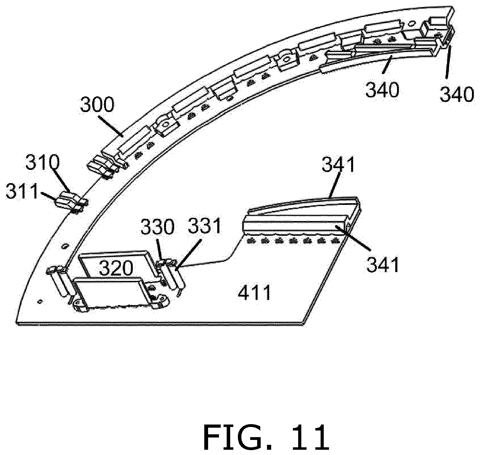

Reference is made to **FIGS. 9 - 11****,** which are simplified illustrations of a PCB assembly (PCBA) in a steering wheel, in accordance with an embodiment of the present invention. **FIGS. 9 - 11** show a printed circuit board assembly (PCBA) **411** populated with various touch and proximity sensor components for a steering wheel **400** according to embodiments of the present invention. **FIG. 9** shows the PCBA from above, **FIG. 10** shows the PCBA rotated, and **FIG. 11** shows a cross-sectional view, to show the three-dimensional features of the light guides. The embodiment illustrated in **FIGS. 9 - 11** includes five different sensor systems.

A first sensor system provides detection zones **507** and **508** in **FIG. 2****.** Each sensor in this first system includes a pair of light guides **330** and **331,** as shown in **FIGS. 9** - **11**. Light guide **330** is coupled to a transmitter (not shown) and light guide **331** is coupled to a receiver (also not shown). When a driver hovers his hand above one of these sensors he generates a high signal as his hand reflects light from light guide **330** back into light guide **331.** This is a type A channel. In some embodiments similar sensors placed along spokes **402** - **404** that connect the gripping member **401** of wheel **400** to the steering column **407** are used to provide detection zones **513** - **515** in **FIG. 3****.** Similar sensors placed inside steering column **407** of wheel **400** also provide detection zone **516** in **FIG. 3****,** in certain embodiments of the invention.

A second sensor system provides detection zones **505** and **506** in **FIG. 2****.** Each sensor in this second system includes an alternating row of transmitters **103** and receivers **203,** coupled to a light guide **320,** as shown in **FIGS. 9** - **11****.** When a driver touches the upper edge of light guide **320** he generates a high signal as his touch reflects light from one or more of transmitters **103** onto a respective one or more neighboring receivers **203.** This too, is a type A channel. In some embodiments similar sensors placed along the spokes **402** - **404** that connect the gripping member **401** of wheel **400** to the steering column **407** are used to provide detection zones **513** - **515** in **FIG. 3****.** Similar sensors placed inside steering column **407** of wheel **400** also provide detection zone **516** in **FIG. 3****,** in certain embodiments of the invention.

A third sensor system provides detection zone **501** in **FIG. 2****.** This system includes a row of emitters **104** that project collimated light beams across opening **412** with the aid of collimating light guide **340.** A row of receivers (not shown) at the opposite end of opening **412** receives the collimated light beams with the aid of a second collimating light guide **341** embedded in the gripping member **401** of wheel **400.** When a driver inserts a hand or finger into the active detection zone **501** in opening **412,** he generates a low signal as his hand or finger blocks a portion of the collimated light beams. This is a type B channel.

The illustrated third sensor system features vertical collimated light beams and detects objects along only one axis. In some embodiments, an additional, similar sensor system embedded in the left and right portions of gripping member **401** is added to project horizontal collimated beams across opening **412.** In this case, the two sets of orthogonal collimated beams provide two-dimensional (2D) detection of inserted objects. In some embodiments, similar sets of orthogonal beams are used in openings **511** and **512** of **FIG. 3** to provide 2D detection as illustrated by light grid **600** in **FIG. 4****.**

A fourth sensor system includes two sensors along each side of steering wheel 400. These sensors provide detection zones **503** and **504** in **FIG. 2****.** Each sensor in this fourth system includes a pair of light guides **310** and **311,** as shown in **FIGS. 9** - **11****.** Light guide **310** is coupled to a transmitter (not shown) and light guide **311** is coupled to a receiver (also not shown). When a driver hovers his hand opposite one of these sensors he generates a high signal as his touch reflects light from light guide **310** back into light guide **311.** This is a type A channel. In some embodiments, similar sensors are placed around the entire wheel to provide detection zone **517** in **FIG. 3****.**

A fifth sensor system includes a series of sensors along the upper outer rim of steering wheel **400.** These sensors provide detection zone **502** in **FIG. 2****.** Each sensor in this fifth system includes a transmitter **100,** a receiver **200** and a light guide **300.** A driver touching the outer rim of the wheel opposite one of these sensors generates a high signal as his touch reflects light from emitter **100** back onto receiver **200.** Therefore this is a type A channel. Similar sensors placed around the entire wheel can be used to provide detection zone **22** in **FIG. 3****.**

In some embodiments of the present invention, in addition to the near-infrared light used for the sensors, visible light elements are also embedded in the steering wheel, to light up the various detection zones. The visible light elements are used, inter alia, in order to illuminate a hand inside zones **510** - **512,** or to follow hand movements insides zones **510** - **512** or along zones **502** - **506,** so as to provide visible feedback to the driver who is interacting with the sensors.

The type A channel sensor systems described hereinabove detect light from the transmitter reflected off the driver's finger or hand onto a nearby receiver. The maximum distance that this type A sensor can detect is defined as the sensor's *"nominal range".* In some embodiments, the different sensor systems have different nominal ranges. For example, when the second and fifth sensor systems are designed to be used as a touch switch or slider control, they are adjusted to a very short nominal range. Similarly, when the first and fourth sensor systems are designed to detect hover gestures in the air above or opposite the sensor, they are adjusted to a nominal range of several inches. And when the first system is designed to detect a driver entering the car it is adjusted to a very large nominal range.

There are several ways to adjust the nominal range, based inter alia on the intensity of the transmitter, on the detection threshold used to decide whether an object is present in the channel, and on the light guide. Specifically, when the light guide absorbs a portion of the light in the detection channel the sensor has a shorter nominal range.

The first sensor system, used for detection zones **507** and **508,** is now addressed in detail.

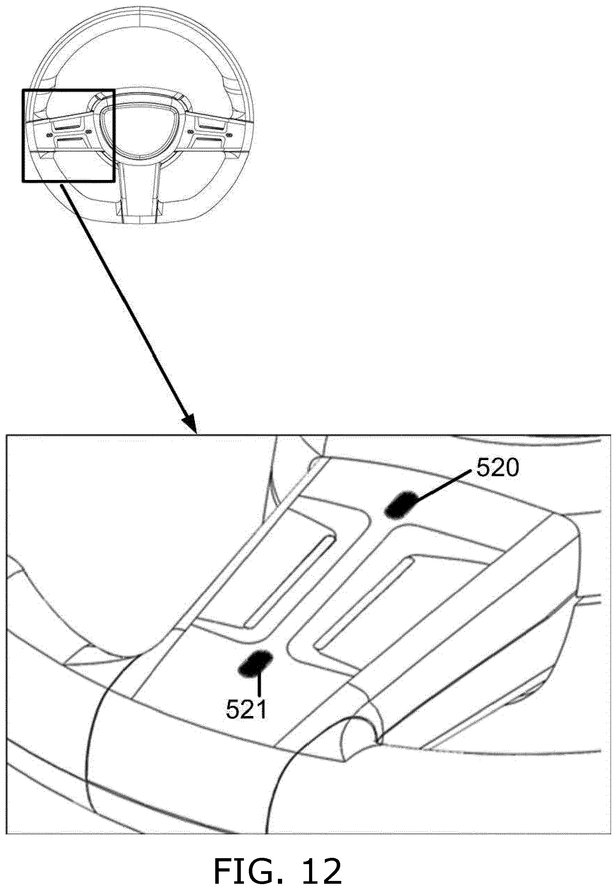

Reference is made to **FIGS. 12 - 16****,** which are simplified diagrams of proximity sensors on a steering wheel, in accordance with an embodiment of the present invention.

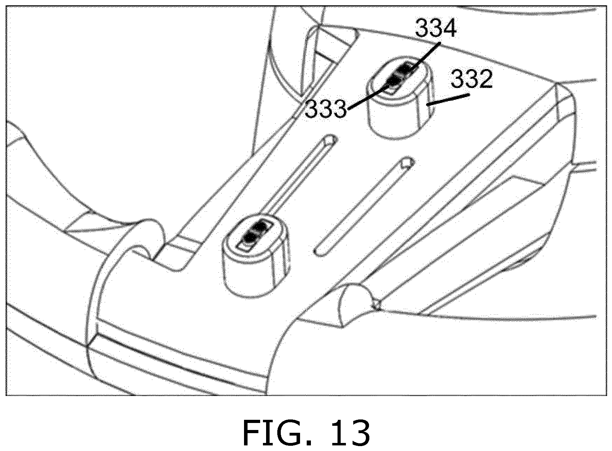

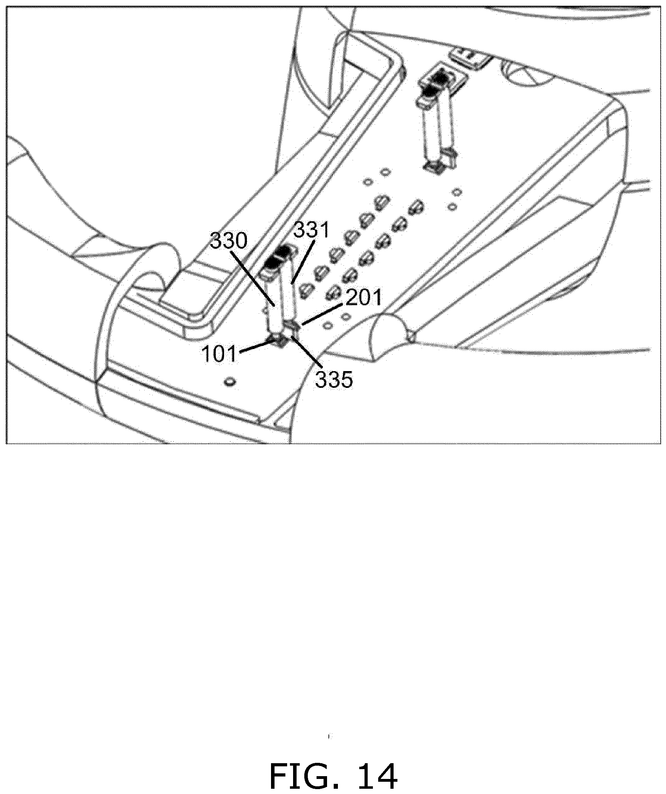

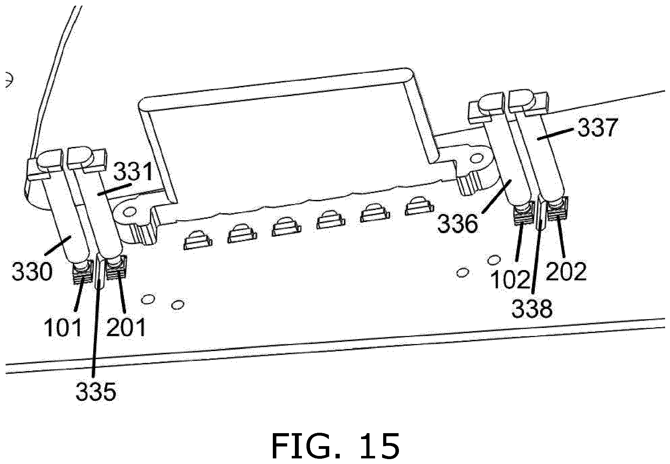

**FIGS. 12 - 15** show layers of components that form sensors **520** and **521.** **FIG. 12** shows proximity sensors **520** and **521** as seen by a driver. **FIG. 13** shows proximity sensors **520** and **521** with the upper steering wheel casing layer removed. As seen in **FIG. 13****,** these proximity sensors feature a supporting column **332** having a transmitter light guide upper surface **333** and a receiver light guide upper surface **334** at the top of the column. In **FIG. 14** column **332** is removed, exposing upward facing transmitter **101** directly beneath light guide **330,** upward facing receiver **201** directly beneath light guide **331,** and light barrier **335** between transmitter **101** and receiver **201** to prevent scattered light from transmitter **101** from reaching receiver **201.** **FIG. 15** is another view of the elements in both proximity sensors **520** and **521:** transmitters **101** and **102,** receivers **201** and **202,** light guides **330, 331, 336** and **337** and light barriers **335** and **338.** Light guides **330, 331, 336** and **337** are adapted to use total internal reflection (TIR) to maximize the amount of light in this detection channel.

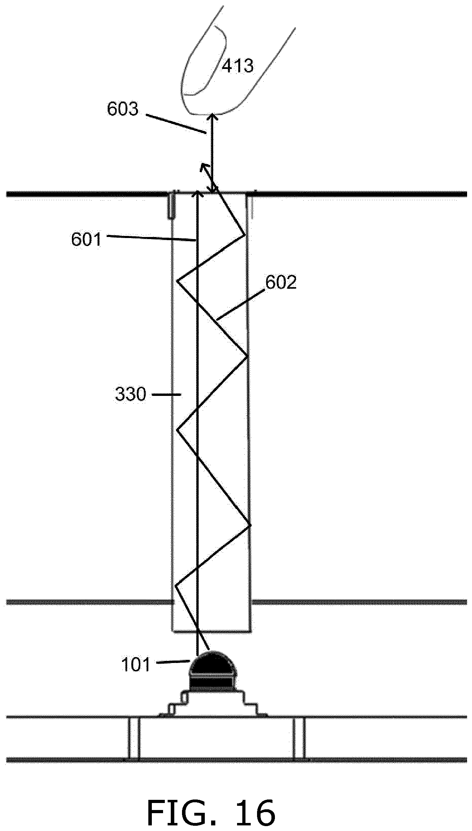

The operation of sensors **520** and **521** is illustrated in **FIG. 16** showing emitter **101** sending a direct light beam **601** and a TIR beam **602** through light guide **330** out above the sensor. A finger **413** hovering above the sensor reflects a portion of the emitter beam back into neighboring light guide **331** and onto receiver **201,** as illustrated by two-sided arrow **603.** Light guide **331** and receiver **201** are not shown in **FIG. 16****.**

The second sensor system, adjusted to a very short nominal range and used for zones **502, 505** and **506,** is now addressed in detail.

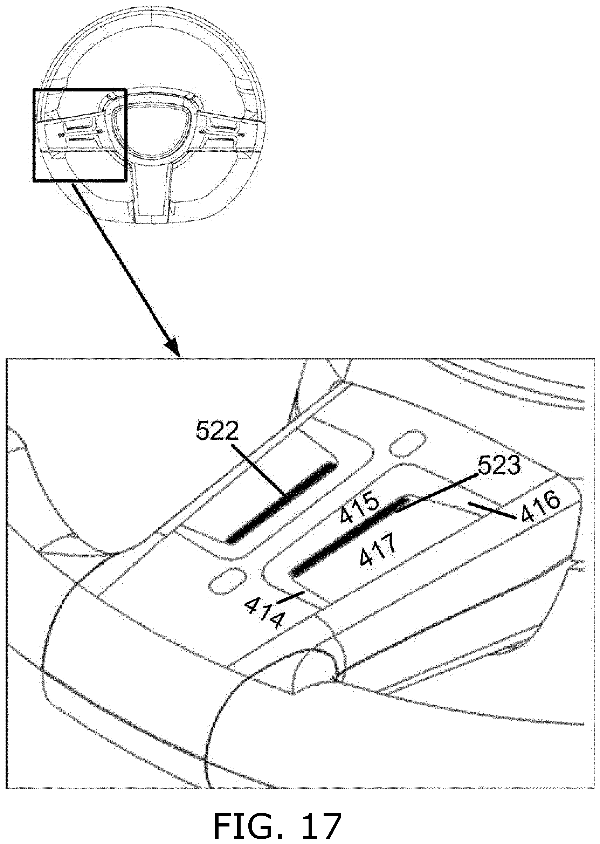

Reference is made to **FIGS. 17** - **20****,** which are simplified illustrations of slider controls embedded in a steering wheel, in accordance with an embodiment of the present invention. **FIGS. 17** - **20** show layers of components that form slider controls **522** and **523.** In the illustrated embodiment each of these slider controls is situated inside a gently sloping recessed cavity to facilitate gliding a finger along the control without taking eyes off the road. A first recessed cavity is formed by inclined surface **417** surrounded on three sides by walls **414** - **416.** Slider control **523** is located along the boundary joining surface **417** to wall **415.**

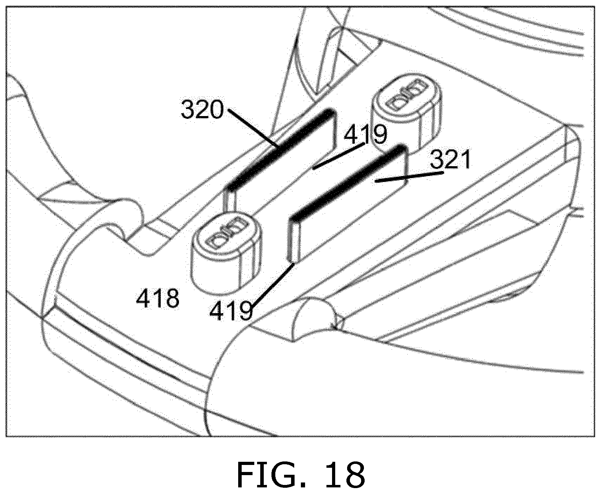

**FIG. 18** shows that the exposed surface of slider controls **522** and **523** is the long, thin, top surface of upright light guides **320** and **321.** Light guides **320** and **321** are supported in their upright position by being inserted through narrow opening slots **419** in intermediate layer **418.**

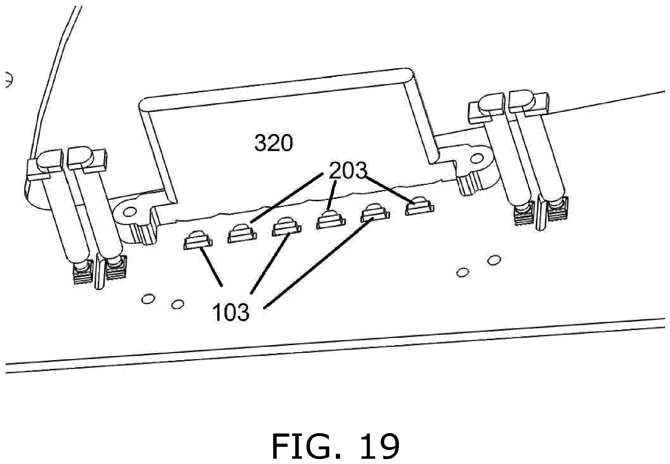

**FIG. 19** shows the inner components of slider control **522** after intermediate layer **418** has been removed. Slider control **522** includes one alternating row of transmitters **103** and receivers **203,** and one upright light guide **320.** Slider control **522** is a linear series of detection channels where each channel has a transmitter at one end of the channel and its neighboring receiver in the alternating row of transmitters and receivers at the other end of the channel.

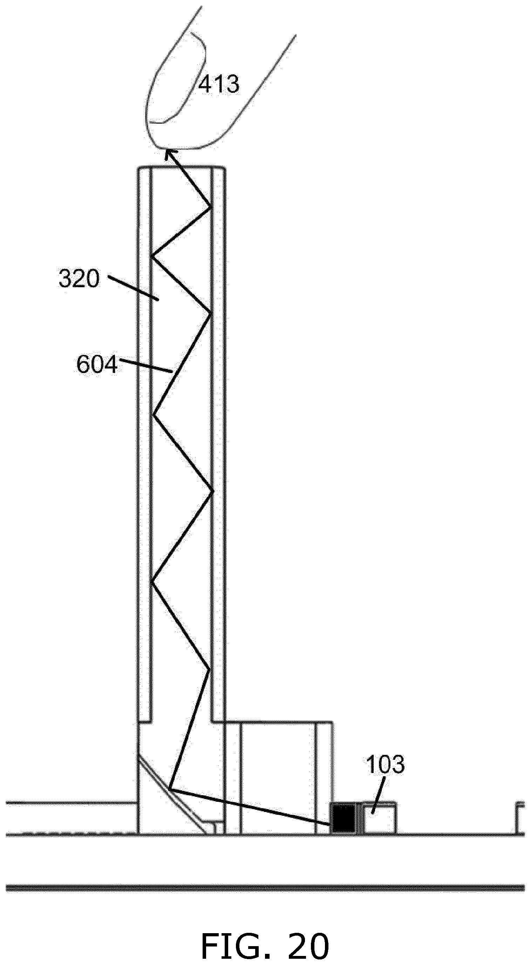

Reference is made to **FIG. 20** illustrating the light beam path through this channel. Light beam **604** exits transmitter **103** and is directed upward through light guide **320.** A finger **413** touching the top of light guide **320** reflects a portion of the beam back down into light guide **320.** A portion of this reflected light is directed through light guide **320** onto a neighboring receiver **203** (shown in **FIG. 19****)** completing the detection channel. As a driver's finger glides along the exposed surface of light guide **320** different detection channels are activated indicating the location of the finger along this slider control. Light guides **320** and **321** are adapted to use TIR to maximize the amount of light in the detection channels.

The type B sensor system used for zone **501** will now be discussed in detail.

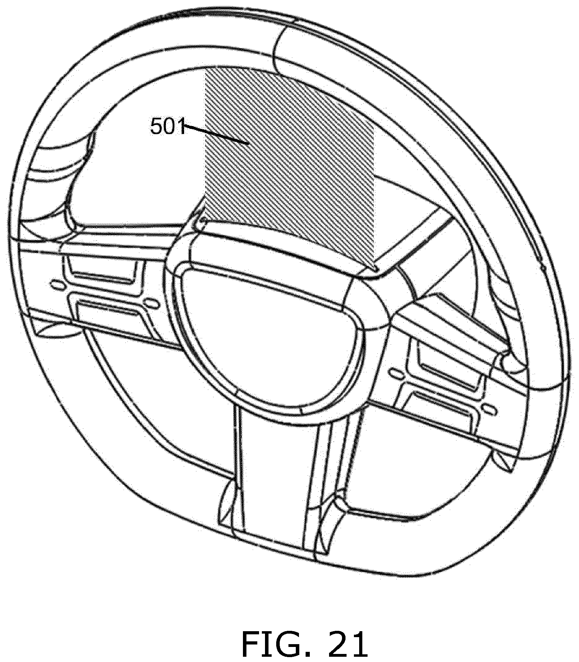

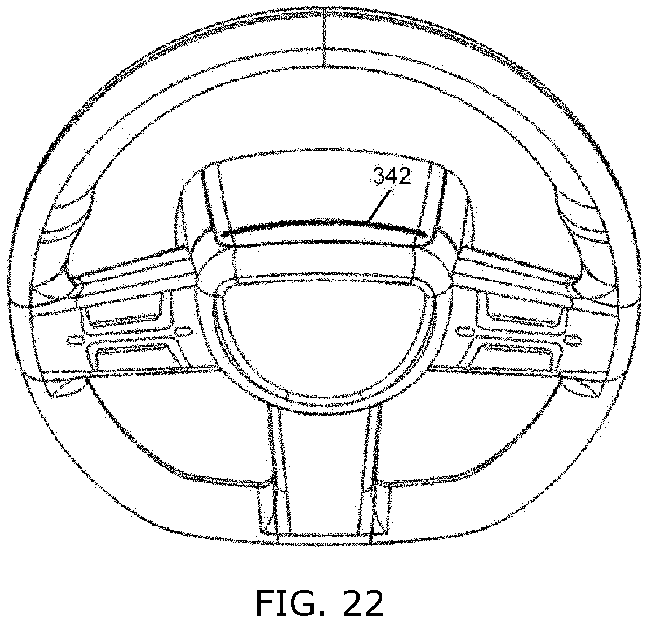

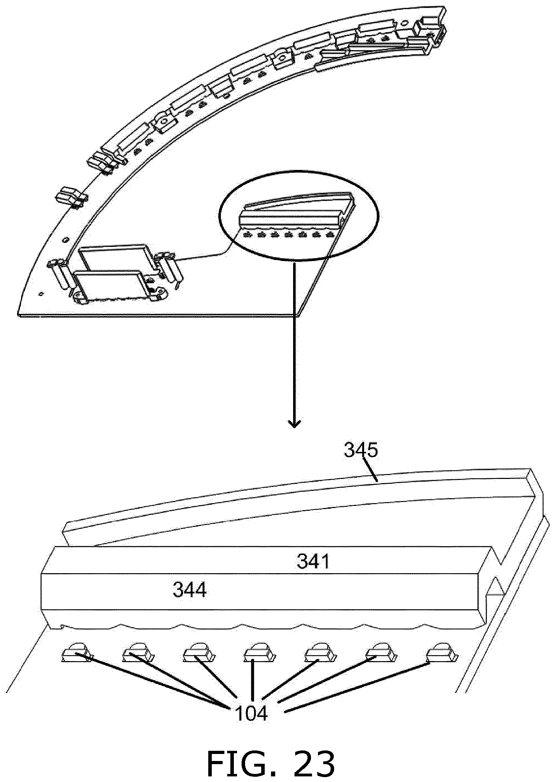

Reference is made to **FIGS. 21** - **30****,** which are simplified diagrams of sensors embedded in a steering wheel that detect gestures inside an open cavity in the steering wheel, in accordance with an embodiment of the present invention. Detection zone **501** is illustrated in **FIG. 21****.** **FIG. 22** shows the exposed upper edge **342** of light guide **341** that projects light beams into zone **501.** **FIG. 23** shows a rotated cross section of light guide **341** and an array of transmitters **104** situated below light guide **341** in the steering column. Light guide **341** includes collimating, internally reflective elements (not shown) that collimate light inside the light guide, internally reflective facet **344,** and curved window **345.** Curved window **345** is required in order that this light guide follow the contours of the rounded steering column in which it is mounted. The outer surface of window **345** is exposed upper edge **342** of **FIG. 22****.** In some embodiments of the present invention, window **345** is formed with a uniform thickness, in order to minimize the lens effect that this widow has on the sensor light beams. In some embodiments, window **345** is also formed as thin as possible, in order to minimize the distance that the light beams are shifted laterally when they pass through the window.

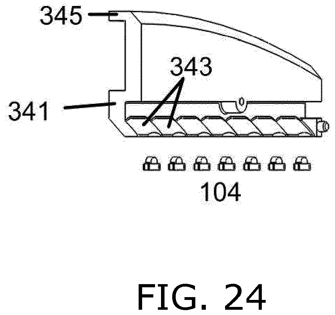

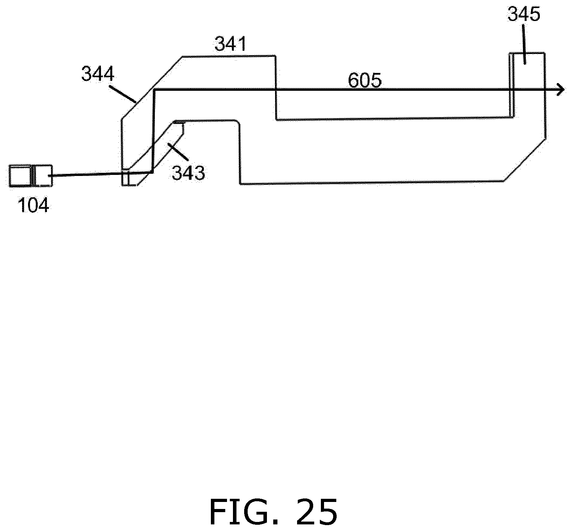

Reference is made to **FIG. 24** showing light guide **341** viewed from underneath. In this view, internally reflective collimating surfaces **343** are visible. Each surface **343** collimates a wide light beam emitted by a transmitter into the light guide. In addition, surface **343** also redirects the collimated light onto internally reflective surface **344** as light beam **605** in **FIG. 25** illustrates.

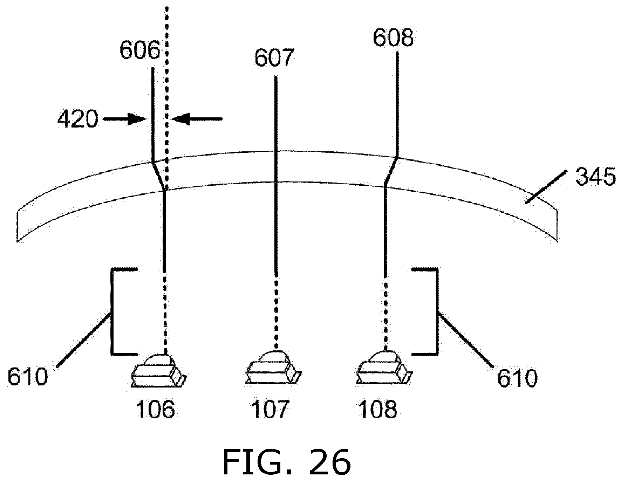

**FIG. 26** shows three beams **606** - **608** from respective emitters **106** - **108,** passing through lens **345.** **FIG. 26** illustrates how a uniform thickness and a large radius of curvature relative to the width of the beam of window **345,** minimize the lens effect on three light beams **606** - **608.** E.g., beam **606** is offset to the left of emitter **106** when it exits curved window **345,** but is not redirected as a result of passing through the window. The offset for beam **606** is indicated in the figure by distance **420.** When window **345** is thin, the offset is negligible. In some embodiments, for which the offset is not negligible and for which the emitters and receivers are evenly spaced on PCB **411,** beam offsets are handled in software, inter alia by calculating the position of the corresponding blocked beam according to the beam position when it crosses the screen, which is offset from the emitter and receiver location. In other embodiments, for which the offset is not negligible, the emitters and receivers are not evenly spaced on PCB **411,** in order for the offset to cause the beams crossing detection zone **501** to be evenly spaced. The dotted portions **610** of the beams represent the beams passing through light guides **340** and **341,** which are not shown in this figure.

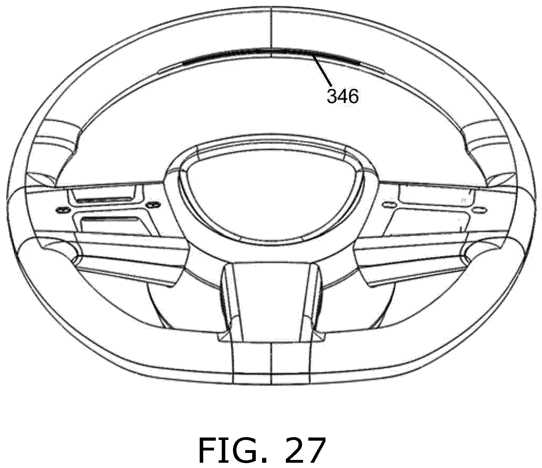

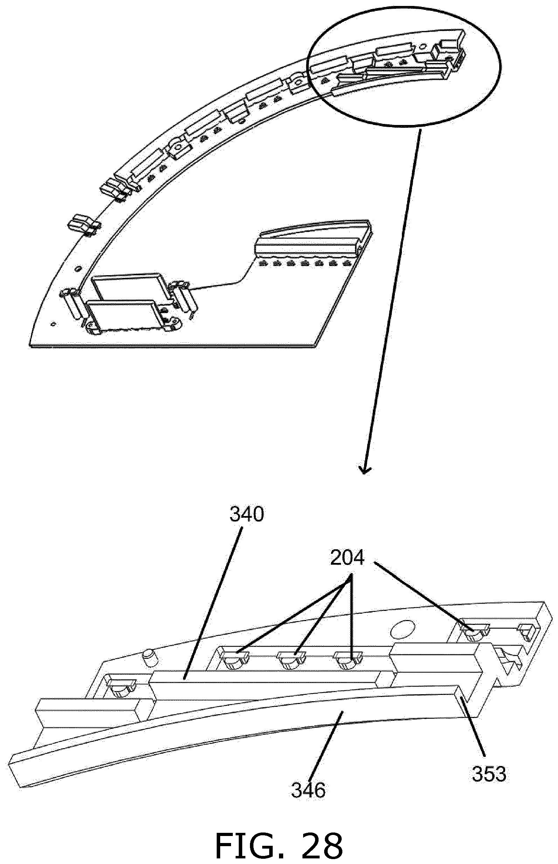

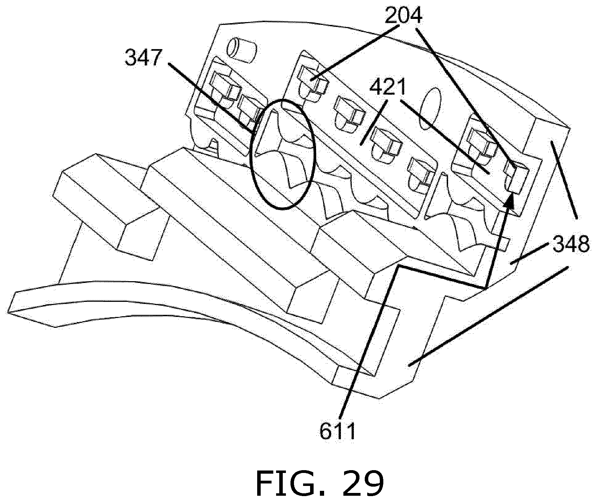

The second half of the light sensor for zone **501** is now discussed. **FIG. 27** shows the exposed lower edge **346** of a light guide that receives the projected light beams and directs the beams onto receivers embedded inside the circular gripping member of the steering wheel. **FIGS. 28** and **29** are two cross-sectional views showing three staggered rows of receiver elements **204** together with their respective light guides inside the circular gripping member of steering wheel **400.** Collimated light crossing detection zone **501** enters the gripping member through curved window **353.** In order to maintain the collimation of the light beams, window **353** has a uniform width and substantially similar arcs at both its inner and outer surfaces, like window **345** described hereinabove.

**FIG. 29** shows light guide **340** from a different angle than in **FIG. 28****.** The collimating portion of this light guide is circled section **347.** This collimating portion uses two air-to-plastic interfaces to direct the collimated wide beam onto a respective receiver **204.** The operation of these collimating lenses is more fully explained in US Patent Application No. 13/424,543 for OPTICAL ELEMENTS WITH ALTERNATING REFLECTIVE LENS FACETS. In particular, reference is made to FIGS. 50 - 52 and associated paragraphs [00267] - [00271] in US Patent Application No. 13/424,543. In the embodiment illustrated in **FIG. 29** the light guides are formed of a single piece of plastic **348.** The receivers **204** are shown suspended in cavities **421** formed in plastic **348.** The PCB on which these receivers are mounted is not shown in the figure: it is above the receivers, and covers cavities **421.** The path of a light beam **611** through light guide **340** is shown.

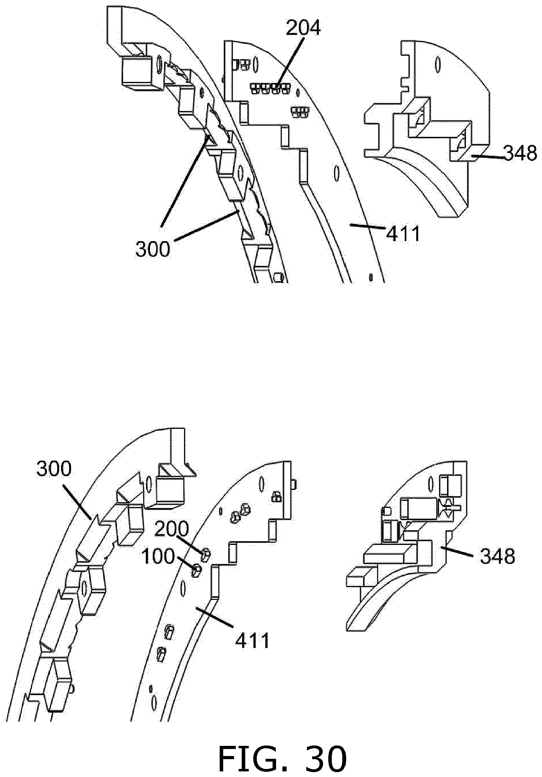

Light transmitters and receivers for two different sensors are mounted on two sides of PCB **411.** **FIG. 30** shows exploded views from both sides of steering wheel PCB **411.** The light receivers **204** for detection zone **501** are on one side of the PCB, and transmitter-receiver pairs **100** - **200** for detection zone **502** are mounted on the reverse side of this PCB. The exploded view also shows light guide **300,** used for detection zone **502,** and plastic element **348** that forms light guide **340,** both mounted on PCB **411.**

The type A sensor used for detection zones **503** and **504** described hereinabove will now be described in detail.

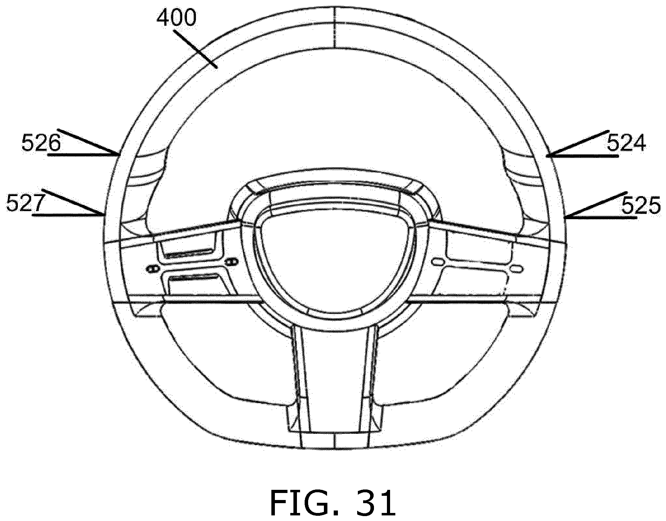

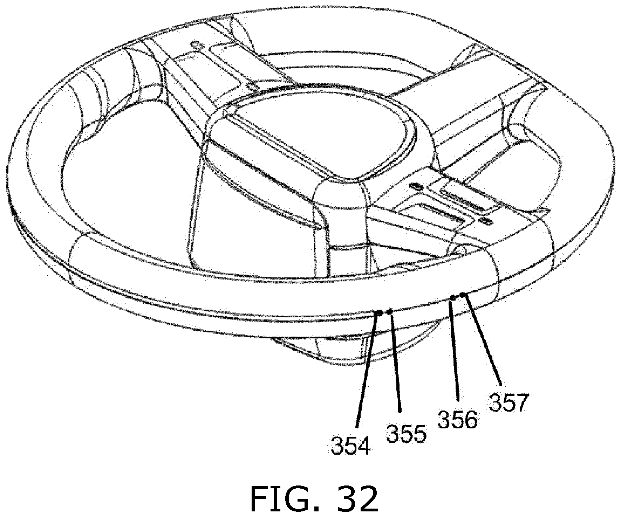

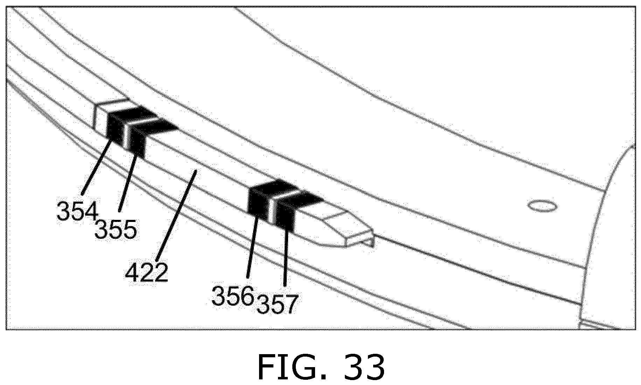

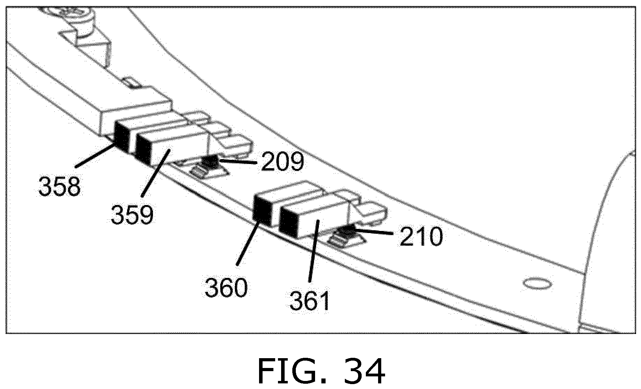

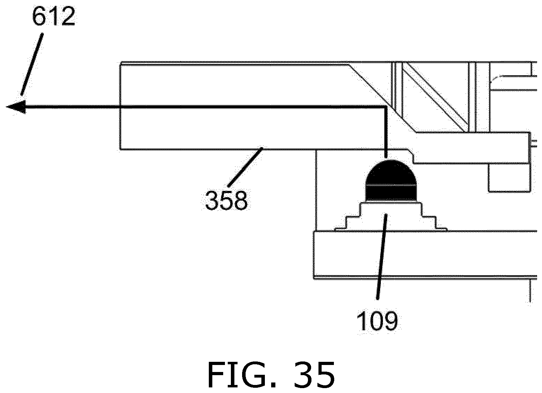

Reference is made to **FIGS. 31 - 35****,** which are simplified diagrams of proximity sensors embedded in the outer rim of a steering wheel, in accordance with an embodiment of the present invention. **FIG. 31** shows four detection zones **524** - **527** on either side of steering wheel **400.** **FIG. 32** shows two of the sensors that provide these detection zones on one side of the steering wheel by projecting light beams away from the wheel and detecting a portion of the beams that is reflected back by a hovering finger or hand. As seen by the driver, each sensor includes a light emitting surface **354** or **356,** and a neighboring light receiving surface **355** or **357.** **FIG. 33** shows a plastic rim **422** inlaid in the outer rim of the steering wheel and having near-infrared (NIR) transmissive portions **354** - **357** that allow the passage of NIR light for these sensors. **FIG. 34** shows that the NIR transmissive portions are actually separate light guides **358 - 361,** where a pair of light guides forms a detection channel. Each of light guides **358** - **361** is coupled to a respective transmitter or receiver component. Thus, light guides **358** and **360** are coupled to respective transmitters (blocked from view in the figure by light guides **359** and **361),** and light guides **359** and **361** are coupled to receivers **209** and **210,** respectively. **FIG. 35** shows a light beam path **612** through light guide **358.** **FIG. 35** also shows transmitter **109** coupled to light guide **358.**

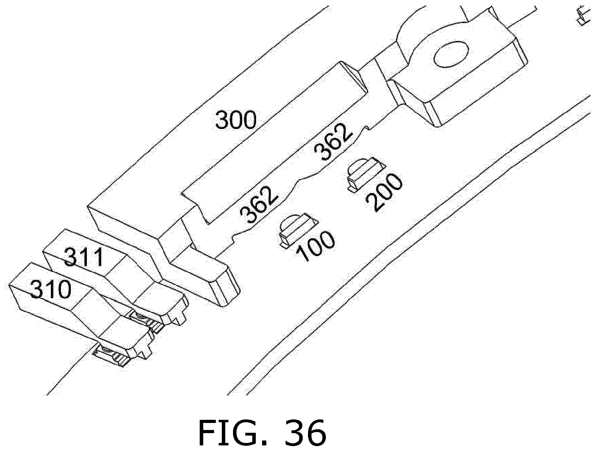

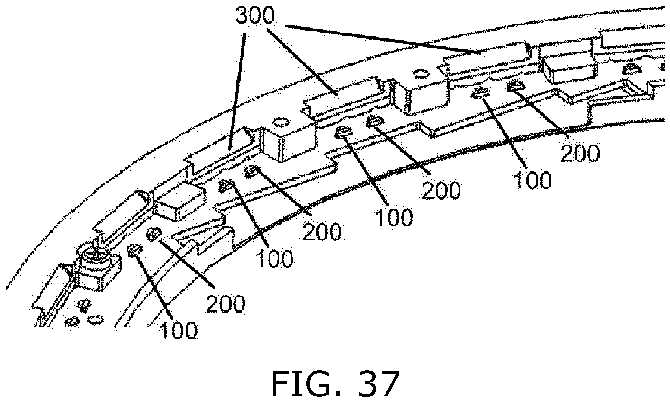

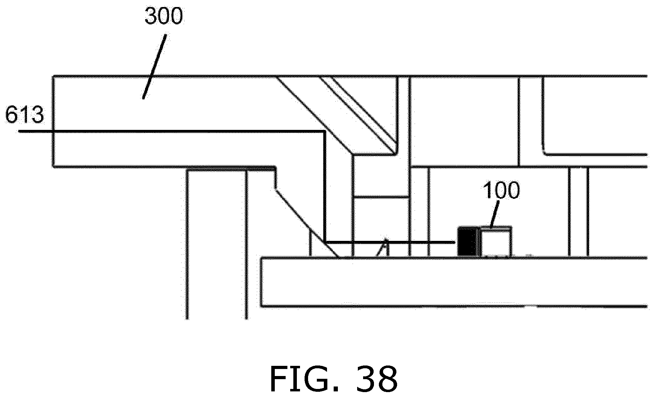

Reference is made to **FIGS. 36** - **38****,** which are simplified diagrams of touch sensors embedded across the outer rim of a steering wheel, in accordance with an embodiment of the present invention. **FIGS. 36** and **37** show the components in a type A sensor used for detection zone **502** described hereinabove; namely, transmitter-receiver pairs **100** - **200** and light guide **300.** Light guide **300** is shared by both transmitter **100** and receiver **200,** and light guide **300** has a collimating lens portion **362** opposite each transmitter and opposite each receiver. **FIG. 38** shows how light guide **300** acts as a periscope for the light beams, such as light beam **613** emitted by emitter **100.** As described above, a steering wheel equipped with a series of these sensors along its outer rim is enabled to detect tap gestures and hand-slide gestures along the wheel's outer rim.

In some embodiments of the present invention, a processor connected to the touch sensors along the steering wheel rim or spokes detects the number of fingers on each hand touching the wheel. This is performed by heuristically determining the size of the segment covered by a hand holding the wheel, or by detecting a series of up to four objects next to each other along the sensor array. When the driver taps the wheel with only one finger as he grips the wheel, e.g., by tapping on the wheel with one finger while continuing to grip the wheel with the other fingers, the processor determines which finger performed the tap according to the location of the tap within the segment of the wheel being held. This enables a user interface whereby different fingers are associated with different functions. For example, taps by an index finger control the stereo and taps by the middle finger control the telephone. Determination of which finger is tapping the wheel is based on the finger's relative position within the segment of the wheel that is held, as detected by the touch sensors. As such, this user interface is not dependent on which segment of the wheel is being touched. It is thus applied anywhere on the wheel, based on relative finger position. In some cases, the processor distinguishes between right and left hands according to right and left halves of the wheel.

In some embodiments of the present invention, multiple sensors are arranged around the tubular or cylindrical surface of the wheel grip in order to detect when the driver rotates his hand around the grip in the manner of a motorcycle driver revving a motorcycle engine by rotating the handle bar grip. The user interface is configured to control a particular feature by this gesture. In applications of the present invention to motorcycle handlebars, these sensors provide an alternative to rotating handlebar grips for controlling the speed of the motorcycle engine.

In some embodiments of the present invention, proximity detectors or touch detectors are also mounted on the rear of the steering wheel grip or spokes to detect tap gestures on the back of a spoke or on the back of the wheel grip performed by fingers wrapped around the wheel. For example, these gestures are used to shift gears, or to shift the drive mode. Drive modes include, inter alia, eco mode, sport mode, 2-wheel drive and 4-wheel drive.

In some embodiments of the present invention, the vehicle loads a user profile that configures the user interface, including assigning various gestures to respective control settings. The vehicle supports multiple users by allowing each user to download his settings to the vehicle. Thus, settings for multiple users are uploaded to an Internet server. When a driver enters a car, the driver downloads his settings from the Internet server to the vehicle, thus adapting the vehicle to his customized settings. For example, different gestures can be mapped to control different features by the driver. One application for this system is a rental car. When a driver rents a car he downloads his user profile to the rental car so that the user interface is familiar. Another application is for car dealerships, whereby a car's user interface is customized for a buyer while the buyer tries out a test model or sits inside a dummy cockpit. The dealer configures the user's profile in the demo car and uploads it to the Internet server. The dealer does not need to customize the purchased car when it arrives beyond downloading the buyer's profile.

Aspects of the present invention also relate to contextual user interfaces. When a driver enters the car, the car's user interface asks the driver what he wants to do and guides him to do so, using a display screen. Thus the UI presents options based on context. If the engine is off, the UI asks if the driver wants to start the car. If the driver turns off the motor, the UI presents the following initial options: open doors, open gas tank, open trunk, and open hood. In some embodiments, the display renders a map of the different hand slide and tap gestures that the driver can perform on the steering element to execute these options. If the driver stops the car, the UI asks if the driver wants to park. If the driver responds that he does wish to park, the UI presents parking options, e.g., park on the street or in a nearby lot. In an automated car, capable of traveling without a driver, the UI offers the further option to refill gas, battery or solar panel (depending on how the car is powered) while the driver is out shopping or working. Before leaving the car, the UI asks the driver when to return to the parking spot.

In some embodiments, a biometric sensor is also added to the steering element of the present invention. In order to access the UI, the biometric sensor must first register the driver. If the biometric sensor detects that the driver is not fit to drive the car, e.g., the sensor detects a high heart rate or high alcohol content, the UI responds accordingly and does not allow the driver to drive.

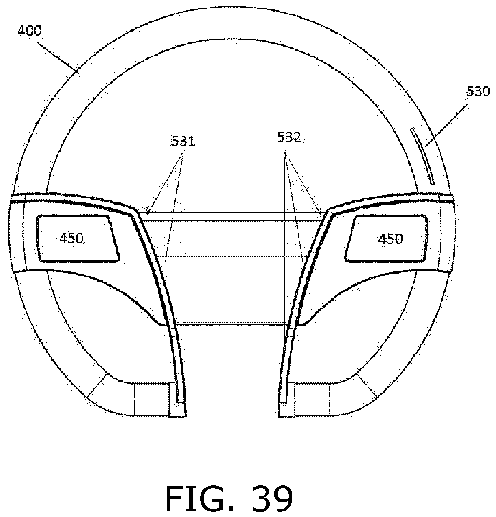

Another embodiment of a steering wheel according to the present invention is illustrated in **FIGS. 39** - **42****.** In this embodiment, the steering wheel includes two embedded touch-sensitive display screens. The display screen information is displayed on a head-up display to the driver so that the driver need not remove his eyes from the road to look down at the displays.

Reference is made to **FIG. 39****,** which is a simplified illustration of a steering wheel with multiple touch sensors and embedded touch screen displays, in accordance with an embodiment of the present invention **FIG. 39** shows steering wheel **400** having two embedded touch screens **450** and a slider control **530.** Slider control **530** is implemented as a series of light emitters and receivers similar to slider controls **522** and **523** described hereinabove with reference to **FIGS. 17** - **20****.** Touch screens **450** are touch-enabled by a series of emitters and receivers along the screen edges that form a touch-detection light grid that covers each screen **450.** Steering wheel **400** is also shown having two proximity sensor strips **531** and **532** for detecting a driver's hand placed on the steering column between these two strips.

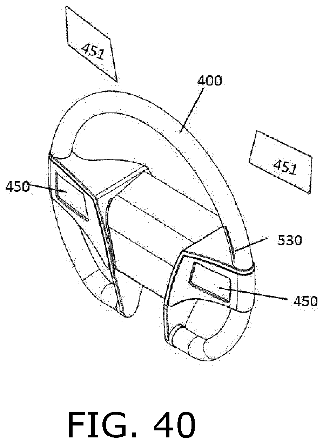

Reference is made to **FIG. 40****,** which is a simplified illustration of the steering wheel of **FIG. 39** with a head-up display, in accordance with an embodiment of the present invention. **FIG. 40** shows steering wheel **400** viewed at an angle. Two head-up displays **451** are provided for rendering graphics from screens **450** at a location easily viewable by the driver. The driver can interact with a user interface on screens **450** by viewing head-up displays **451** and performing touch gestures on screens **450.**

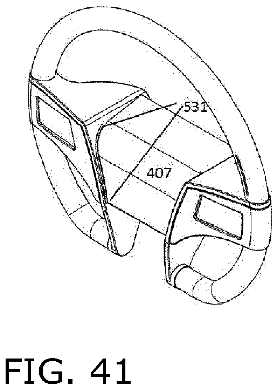

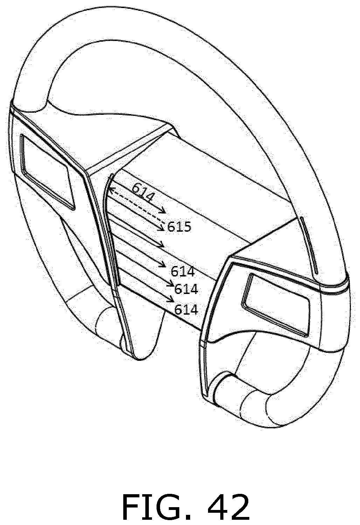

Reference is made to **FIGS. 41** and **42****,** which are simplified illustrations or proximity sensors that line the steering column of the steering wheel of **FIG. 39****,** in accordance with an embodiment of the present invention. **FIG. 41** shows that the front and top of steering column **407** is touch sensitive by virtue of two strips of proximity sensors. A first proximity sensor strip **531** is shown. This strip is formed by an alternating series of emitters and detectors that emit light beams across the outer surface of column **407.** This strip curves along the contours of steering column **407.** When the driver places his hand on steering column **407,** the hand reflects the projected light beams back into the proximity sensor where neighboring detectors sense an increase in reflected light. The operation of this type of proximity sensor is described in applicant's co-pending U.S. Patent Application No. 13/775,269 entitled REMOVABLE PROTECTIVE COVER WITH EMBEDDED PROXIMITY SENSORS, especially FIGS. 4 - 10 there. The second proximity sensor strip **532** is opposite strip **531** and is not visible given the viewing angle of **FIG. 41****.**

**FIG. 42** shows the light beams of proximity sensor strip **531.** Emitter beams **614** are shown adhering to the contours of steering column **407.** One reflected beam is shown as dashed beam **615.** When the driver places a hand on steering column **407** his hand reflects one or more of beams **614** back as beam **615.**

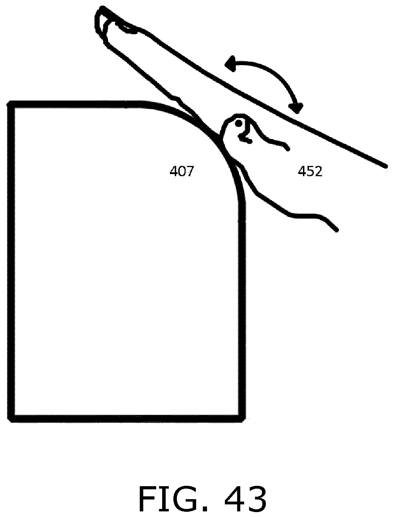

Reference is made to **FIG. 43****,** which is a simplified illustration of a user interface gesture performed on the steering column of the steering wheel of **FIG. 39****,** in accordance with an embodiment of the present invention. **FIG. 43** shows a hand gesture detected by the two proximity sensors lining steering column **407.** In this gesture the driver tilts palm **452** along the rounded corner formed by steering column **407.** In some applications, this gesture is used to adjust the angle of a side view mirror. Thus, titling the palm downward and touching a higher portion of column **407** tilts the mirror upwards; tilting the palm to be more vertical tilts the mirror downward.

The two proximity sensors lining two opposite edges of steering column **407** form a unique two-dimensional detector. A location along the proximity sensor at which the reflected beam is detected is a location along one dimension. The nearer the reflecting object is to strip **531** or **532,** the greater the detection signal. Comparing the detection signals of proximity strip **531** to those of proximity strip **532** provides a coarse estimation of where the finger is located between the two strips. Thus, if both strips detect similar amounts of reflected light, the finger is roughly in the middle between the two strips. Whereas if one proximity sensor strip detects more light than the other, the finger is nearer to the high detection strip.

Embodiments of the present invention also relate to vehicle dashboards, driver display systems and related user interfaces.

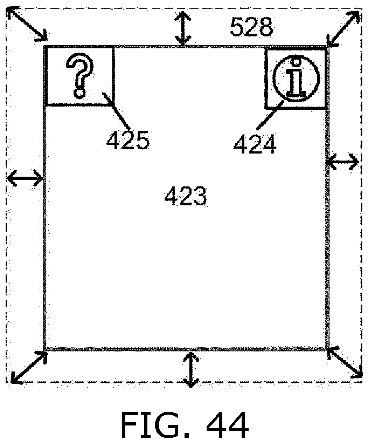

Reference is made to **FIGS. 44 -46****,** which are simplified illustrations of user interfaces and associated sweep gestures that are enabled on a vehicle dashboard, in accordance with an embodiment of the present invention. **FIG. 44** shows dashboard display **423** having proximity sensors along its edges. In some embodiments of the present invention, the display itself does not provide touch detection, i.e., it is not a touch screen. A frame **528** is shown surrounding the display. This frame indicates a detection zone for detecting proximity and hover gestures. The display shows two icons **424** and **425** in the upper right and left corners, each representing a family of related functions. When the driver performs a sweeping gesture with his hand above a portion of the display, he expands a corresponding icon to reveal a complete set of related functions.

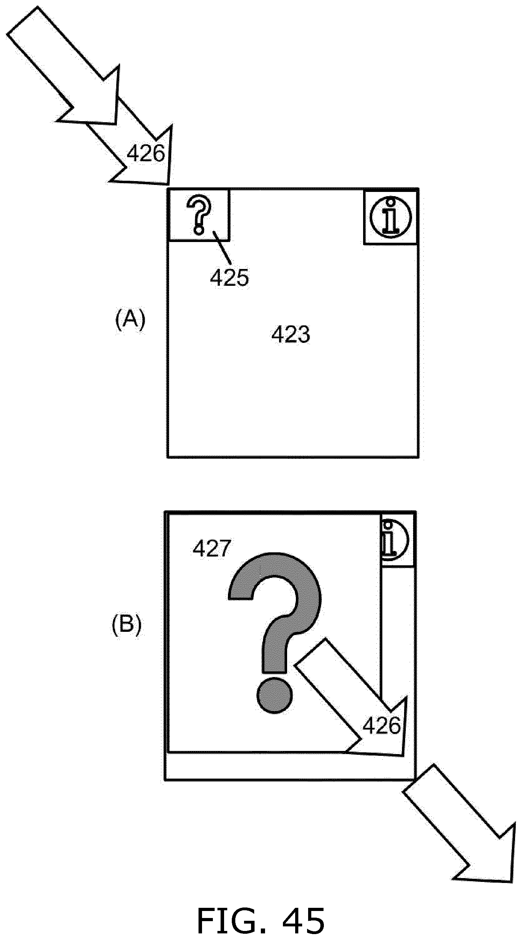

**FIG. 45** shows the effect of a gesture in this context. Dashboard display **423** is shown in the upper portion of **FIG. 45** marked **(A).** A sweeping gesture across the upper left corner of the display and continuing diagonally across the display is indicated by arrows **426.** As the gesture progresses across the screen diagonal, icon **425** expands across the screen. The expanded icon is shown as icon **427** in the lower portion of **FIG. 45** marked **(B).** In some embodiments, this expanded area is populated with icons related to the function represented by icon **425.** In other embodiments, the expanded icon presents further options for similar gestures that expand, providing multiple layers of expanded screens.

Embodiments of the present invention thus provide easy access to an extensive array of functions with a simple hand gesture in an associated corner or side of the display. This allows the user interface to present a limited number of icons on the initial display without cluttering up the display, and to expand a selected icon to reveal a full list of related functions in response to the aforementioned sweeping gesture.

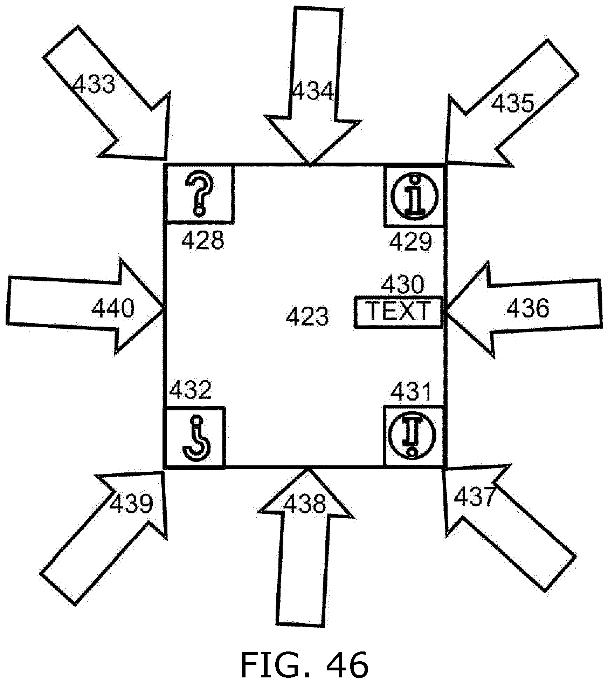

**FIG.46** shows dashboard display **423** with four icons **428, 429, 431** and **432** in the four corners of the display and a text box **430** at the right edge of the display. Eight arrows **433** - **440** indicating eight different sweep gestures are shown. Each sweep gesture changes the display in accordance with an icon or text associated with that gesture. In **FIG.46****,** gestures **433, 435, 437** and **439** are each associated with a respective icon, and gesture **436** is associated with text **430.** Additional gestures such as gliding along the edges of the display also provide functionality in some embodiments.

The hover and proximity sensors that detect the dashboard sweep gestures described hereinabove are substantially the same sensors described with respect to the steering wheel. These sensors are distributed at discrete locations around the dashboard display.

The specipication and drawings are to be regarded in an illustrative rather than a restrictive sense.

## Claims

1. A system for a vehicle, comprising:
a steering element (400) situated opposite a driver seat in a vehicle, comprising:
a plurality of proximity sensors (100, 200, 300) encased in the periphery of the steering element operable to detect movements of a driver's hand along the outer periphery (502, 517) of the steering element; and
visible-light emitters embedded in the steering element operable to illuminate detection zones of the steering element; and
a processor, coupled with said proximity sensors and said visible-light emitters, operable to activate said visible-light emitters to follow the hand movements along the outer periphery of said steering element, and to control an interactive deck housed in the vehicle and/or contextual user interfaces functions of the vehicle in response to the detected hand movements.

2. The system of claim 1 wherein said processor further activates said visible-light emitters so as to provide feedback to the driver.

3. A user interface method for a vehicle, the vehicle comprising a steering element (400) situated opposite a driver seat, the steering element comprising a plurality of proximity sensors (100, 200, 300) encased in the periphery of the steering element operable to detect hand movements along the outer periphery (502, 517) of the steering element, and visible-light emitters embedded in the steering element operable to illuminate detection zones of the steering element, the method comprising:
activating, by a processor, the visible-light emitters to follow the hand movements along the outer periphery of the steering element; and
controlling, by the processor, functions of the vehicle in response to the detected hand movements.

4. The method of claim 3, further comprising activating the visible-light emitters so as to provide feedback to a driver of the vehicle.

## Patentansprüche

1. System für ein Fahrzeug, umfassend:
ein Lenkelement (400), das sich gegenüber einem Fahrersitz in einem Fahrzeug befindet, umfassend:
eine Vielzahl von Näherungssensoren (100, 200, 300), die in der Peripherie des Lenkelements eingefasst sind und dazu dienen, Bewegungen der Hand eines Fahrers entlang der Außenumfangs (502, 517) des Lenkelements zu erfassen; und
Emitter sichtbaren Lichts, die in das Lenkelement eingebettet sind, die funktionsfähig sind, um Erfassungszonen des Lenkelements zu beleuchten; und
einen Prozessor, der mit den Näherungssensoren und den Emittern sichtbaren Lichts gekoppelt ist, der funktionsfähig ist, um die Emitter sichtbaren Lichts zu aktivieren, um den Handbewegungen entlang des Außenumfangs des Lenkelements zu folgen, und um ein interaktives Deck, das in dem Fahrzeug untergebracht ist, und/oder kontextbezogene Benutzeroberflächenfunktionen des Fahrzeugs als Reaktion auf die erfassten Handbewegungen zu steuern.

2. System nach Anspruch **1,** wobei der Prozessor ferner die Emitter sichtbaren Lichts aktiviert, um dem Fahrer eine Rückmeldung bereitzustellen.

3. Benutzeroberflächenverfahren für ein Fahrzeug, das Fahrzeug umfassend ein Lenkelement (400), das gegenüber einem Fahrersitz angeordnet ist, das Lenkelement umfassend eine Vielzahl von Näherungssensoren (100, 200, 300), die in der Peripherie des Lenkelements eingefasst sind und funktionsfähig sind, um Handbewegungen entlang der Außenumfangs (502, 517) des Lenkelements zu erfassen, und Emitter sichtbaren Lichts, die in das Lenkelement eingebettet und funktionsfähig sind, um Erfassungszonen des Lenkelements zu beleuchten, das Verfahren umfassend:
Aktivieren, durch einen Prozessor, der Emitter sichtbaren Lichts um den Handbewegungen entlang des Außenumfangs des Lenkelements zu folgen; und
Steuern, durch einen Prozessor, von Funktionen des Fahrzeugs als Reaktion auf die erkannten Handbewegungen.

4. Verfahren nach Anspruch **3,** ferner umfassend ein Aktivieren der Emitter sichtbaren Lichts, um einem Fahrer des Fahrzeugs eine Rückmeldung bereitzustellen.

## Revendications

1. Système pour un véhicule, comprenant :
un élément de direction (400) situé en face d'un siège de conducteur dans un véhicule, comprenant :
une pluralité de capteurs de proximité (100, 200, 300) encastrés dans la périphérie de l'élément de direction pouvant fonctionner pour détecter les mouvements de la main d'un conducteur le long de la périphérie extérieure (502, 517) de l'élément de direction ; et
des émetteurs de lumière visible intégrés dans l'élément de direction, pouvant être utilisés pour éclairer des zones de détection de l'élément de direction ; et
un processeur, couplé auxdits capteurs de proximité et auxdits émetteurs de lumière visible, pouvant être utilisé pour activer lesdits émetteurs de lumière visible afin de suivre les mouvements de la main le long de la périphérie extérieure dudit élément de direction, et pour commander une plate-forme interactive logée dans le véhicule et/ou des fonctions d'interfaces utilisateur contextuelles du véhicule en réponse aux mouvements de la main détectés.

2. Système selon la revendication **1** dans lequel ledit processeur active en outre lesdits émetteurs de lumière visible de manière à fournir un retour d'information au conducteur.

3. Procédé d'interface utilisateur pour un véhicule, le véhicule comprenant un élément de direction (400) situé en face d'un siège de conducteur, l'élément de direction comprenant une pluralité de capteurs de proximité (100, 200, 300) encastrés dans la périphérie de l'élément de direction pouvant détecter des mouvements de la main le long de la périphérie externe (502, 517) de l'élément de direction, et des émetteurs de lumière visible intégrés dans l'élément de direction pouvant éclairer des zones de détection de l'élément de direction, le procédé comprenant :
l'activation, par un processeur, des émetteurs de lumière visible pour suivre les mouvements de la main le long de la périphérie extérieure de l'élément de direction ; et
la commande, par le processeur, des fonctions du véhicule en réponse aux mouvements de la main détectés.

4. Procédé selon la revendication **3,** comprenant en outre l'activation des émetteurs de lumière visible de manière à fournir un retour d'information à un conducteur du véhicule.
